# EUROPEAN PATENT APPLICATION

(11) **EP 4 566 808 A1**
(43) Date of publication of application: **11.06.2025**
(21) Application number: 23214653.0
(22) Date of filing: 06.12.2023
(51) Int. Cl.: B32B 7/12, B32B 23/00, B32B 27/38, B32B 27/42, B32B 43/00

(54) **BONDED STRUCTURE COMPRISING AN ELECTROCHEMICALLY DEBONDABLE ADHESIVE**

(71) Applicant: Henkel AG & Co. KGaA, 40589 Düsseldorf (DE)
(72) Inventor: Fleck-Kunde, Tom, 40225 Düsseldorf (DE); Buga, Duygu, 41564 Kaarst (DE); Franken, Uwe, 41542 Dormagen (DE); Stapf, Stefanie, 42549 Velbert (DE); Kamm, Thomas, 51371 Leverkusen (DE)

(57) **Abstract**

The present disclosure is directed to a bonded structure comprising: a first substrate provided with a first electrically conductive surface; a second substrate provided with a second electrically conductive surface; and, an adhesive interposed between said first and second electrically conductive surfaces, wherein at least one of said first and second electrically conductive surfaces is provided by a dried ink film comprising: a matrix of a polymeric resin (F^{R}); and, electrically conductive particles, further wherein said adhesive is electrochemically debondable and is obtained by applying a curable liquid-state composition to at least one of said first and second electrically conductive surfaces followed by the curing of said composition, wherein the curable composition comprises a non-polymerizable electrolyte and a polymeric resin (A^{R}).

## Description

### FIELD OF THE INVENTION

The present disclosure is directed to bonded structure comprising an electrochemically debondable adhesive. More particularly, the present disclosure is directed to a bonded structure comprising an electrochemically debondable adhesive which is disposed between electrically conductive surfaces, of which at least one electrically conductive surface is provided by a dried ink film comprising a polymeric resin and electrically conductive particles.

### BACKGROUND TO THE INVENTION

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature - such as disclosed in US Patent No. 4,171,240 (Wong) and US Patent No. 4,729,797 (Linde et al.) - might be effective but can be time consuming and complex to perform: moreover, the aggressive chemicals and / or harsh conditions required can damage the substrates being separated, rendering them unsuitable for subsequent applications.

Noting these problems, certain authors have sought to develop electrochemically debondable adhesives, wherein the passage of an electrical current through the adhesive acts to disrupt the bonding at the interface of the adhesive and the substrate.

US Patent No. 7,465,492 (Gilbert) describes an electrochemically disbondable composition comprising: a matrix functionality comprising a monomer selected from the group consisting of acrylics, methacrylics and combinations thereof; a free radical initiator; and, an electrolyte, wherein the electrolyte provides sufficient ionic conductivity to said composition to support a faradaic reaction at a bond formed between the composition and an electrically conductive surface and thus allows the composition to disbond from the surface.

US 2007/0269659 (Gilbert) describes an adhesive composition disbondable at two interfaces, the composition: (i) comprising a polymer and an electrolyte; (ii) facilitating joinder of two surfaces; and, (iii) in response to a voltage applied across both surfaces so as to form an anodic interface and a cathodic interface, disbonding from both the anodic and cathodic surfaces.

US2020/195025A (Yoder et al.) describes a system comprising: an electronic device; a battery coupled to the electronic device; and, an electro-adhesive layer included within a coupling between the battery and the electronic device. The electro-adhesive layer is composed of a material that chemically reacts to weaken a bond at an interface between the battery and the electronic device when a current of predetermined magnitude is directed through the electro-adhesive layer between a first electrode and a second electrode, the weakened bond facilitating separation of the battery from the electronic device.

EP 3 835 383 A1 (Henkel AG & Co. KGaA) discloses a bonded structure comprising a first material layer having an electrically conductive surface; and, a second material layer having an electrically conductive surface; wherein a curable and debondable one component (1K) adhesive composition is disposed between the first and second material layers. The curable and one component (1K) debondable adhesive composition comprises: a) epoxy resin; b) a curing agent for said epoxy resin; c) an electrolyte; and, d) an electrically non-conductive filler; wherein said composition comprises at least one of: e) a combination of a solubilizer and a toughener; and, f) electrically conductive particles.

EP 3 835 378 A1 (Henkel AG & Co. KGaA) discloses a bonded structure comprising a first material layer having an electrically conductive surface; a second material layer having an electrically conductive surface; wherein a cured debondable two-part hybrid adhesive composition is disposed between the first and second material layers. The curable and debondable two-part hybrid adhesive composition comprises a first part comprising: a) epoxy resin; b) (meth)acrylate monomer; c) an electrolyte; d) a solubilizer; and, e) a filler. The composition further comprises a second part comprising: a) a curing agent consisting of at least one compound possessing at least two epoxide reactive groups per molecule; b) an accelerator; and, c) a filler.

EP 3 835 386 A1 (Henkel AG & Co. KGaA) discloses a bonded structure comprising a first material layer having an electrically conductive surface; a second material layer having an electrically conductive surface; wherein a cured debondable two-part (2K) adhesive composition is disposed between the first and second material layers. The curable and debondable two-part (2K) adhesive composition comprise a first part comprising: a) epoxy resin; b) an electrolyte; and, c) optionally, a solubilizer. The second part comprises: a) a curing agent consisting of at least one compound possessing at least two epoxide reactive groups per molecule; and, b) an accelerator. The composition still further comprises an electrically non-conductive filler and, optionally a toughener.

It is a common feature of these disclosures that two metallic substrates must be provided, in between the surfaces of which the debondable adhesives are disposed. This imposes a significant limitation on the utility of the debondable adhesives given the ubiquity of bonded structures which should be candidates for disassembly and recycling but which comprise at least one substrate which either is not electrically conductive *per se* or does not present an electrically conductive surface.

### STATEMENT OF THE INVENTION

In accordance with a first aspect of the disclosure there is provided a bonded structure comprising: a first substrate provided with a first electrically conductive surface; a second substrate provided with a second electrically conductive surface; and, an adhesive interposed between said first and second electrically conductive surfaces, wherein at least one of said first and second electrically conductive surfaces is provided by a dried ink film comprising: a matrix of a polymeric resin (F^{R}); and, electrically conductive particles, further wherein said adhesive is electrochemically debondable and is obtained by applying a curable liquid-state composition to at least one of said first and second electrically conductive surfaces followed by the curing of said composition, wherein the curable composition comprises a non-polymerizable electrolyte and a polymeric resin (A^{R}).

The dried ink film(s) may serve to render electrically conductive the surface of at least one electrically non-conductive substrate. Thus, in an important embodiment of the bonded structure, said first substrate possesses a volume electrical conductivity of less than 1 Sm⁻¹ and the first electrically conductive surface thereof is provided by a first dried ink film comprising: a) a matrix of polymeric resin (F^{R}); and, electrically conductive particles. It is preferred that said first dried ink film providing the first electrically conductive surface is disposed on and in direct contact with said first substrate.

Whilst the second substrate may possess both volume and surface electrical conductivity, it is also envisaged that the second substrate may be an insulating material. Thus, it is considered that the second substrate may also possess a volume electrical conductivity of less than 1 Sm⁻¹ and that the second electrically conductive surface may be provided by a second dried ink film comprising: a) a matrix of polymeric resin (F^{R}); and, electrically conductive particles. And preferably said dried ink film providing the second electrically conductive surface is disposed on and in direct contact with said second substrate.

Good results have been obtained where the polymeric resin (F^{R}) of each dried ink film of the bonded structure is chosen from: nitrocellulose; epoxy resins; phenolic resins; and, mixtures thereof. Further, it is preferred that the electrically conductive particles of each dried ink film of the bonded structure be chosen from: carbon black; graphite; carbon nanostructures; carbon fibers; silver; silver coated copper; silver coated graphite; silver coated polymers; silver coated aluminium; silver coated glass; and, mixtures thereof. A particular preference for the use as the conductive particles of graphite, carbon black and mixtures thereof might be noted: any mixtures thereof may, in certain embodiments, be characterized by a ratio by weight of graphite to carbon black of from 1:1 to 5:1.

Where the electrically conductive particles of a dried ink film comprise carbon black either alone or in admixture with other particles, it is preferred that said carbon black is characterized by at least one of:
i) a specific surface area of from 30 to 1400 m²/g, preferably from 100 to 700 m²/g and more preferably from 150 to 350 m²/g, as determined by low temperature nitrogen absorption in accordance with ASTM D 3037-78;
ii) a pore volume of from 1 to 4 ml/g as determined by mercury porosimetry;
iii) a pore diameter of from 25 to 1000 Angstroms, as determined by mercury porosimetry; and,
iv) an oil absorption number from 70 to 500 ml/100g, preferably from 100 to 300 ml/100g and more preferably from 150 to 200 ml/100g, as determined in accordance with ASTM D2414.

These characterizations i) to iv) are not mutually exclusive and one, two three or four of them may be applicable to a given carbon black having utility in the present disclosure.

The dried ink film(s) may be obtained by the coating on the substrate(s) of an ink composition comprising: solvent; said polymeric resin (F^{R}); and, said electrically conductive particles. The carrier solvent may then be removed from the applied ink composition to form the dried film.

In an important embodiment, the dried ink film of the bonded structure is obtained by the evaporative removal of solvent from a composition comprising, based on the weight of the composition: from 2 to 25 wt.%, preferably from 3 to 23 wt.% and more preferably from 4 to 21 wt.% of a) nitrocellulose resin; from 3 to 45 wt.%, preferably from 4 to 43 wt.% and more preferably from 4.75 to 41 wt.% of b) electrically conductive particles, said electrically conductive particles comprising graphite and carbon black, wherein the ratio by weight of graphite to carbon black is from 1:1 to 5:1; c) solvent; and, from 0.5 to 9 wt.%, preferably from 0.5 to 7 wt.% and more preferably from 0.75 to 6 wt.% of d) di- or multi-functional isocyanate, wherein the ratio by weight of the electrically conductive particles to resin is from 0.20:1 to 4:1, preferably from 0.25:1 to 3:1.

In an important embodiment, the non-polymerizable electrolyte of the composition from which the cured, electrochemically debondable adhesive is obtained comprises or consists of a non-polymerizable salt of: ammonium; pyridinium; pyrrolidinium; phosphonium; imidazolium; oxazolium; guanidinium; or, thiazolium.

In particular, the non-polymerizable electrolyte - of the composition from which the cured, electrochemically debondable adhesive is obtained - may be selected from the group consisting of: trihexyl(tetradecyl)phosphonium bis(trifluoromethylsulfonyl)imide; tributylmethylphosphonium bis(fluorosulfonyl) imide; tributylmethyl- phosphonium methyl sulfate; tributylmethylammonium bis(fluorosulfonyl)imide; N-propyl-N-methylpyrrolidinium bis(fluorosulfonyl) imide; 1-ethyl-3-methyl-1H-imidazol-3-um methyl sulfate; 1-ethyl-3-methyl-1H-imidazol-3-um methanesulfonate; 1-ethyl-3-methylimidazolium trifluoromethanesulfonate; 1-ethyl-3-methylimidazolium bis(trifluoromethylsulfonyl)imide; 1-butyl-3-methylimidazolium methyl sulfate; 1-butyl-3-methylimidazolium methanesulfonate; 1-butyl-3-methyl-imidazolium-fluorosulfonate; 1-butyl-3-methylimidazolium trifluoromethanesulfonate; 1-butyl-3-methylimidazolium bis(trifluoromethylsulfonyl)imide; 1-butyl-3-methylimidazolium bis(fluorosulfonyl)imide; 1-dodecyl-3-methylimidazolium bis(fluorosulfonyl)imide; and, mixtures thereof.

The polymeric resin (A^{R}) may desirably be chosen from: epoxy resins; acrylic resins; polyurethane resins; acrylic-epoxy hybrid resins; polyurethane-epoxy hybrid resins; and, mixtures thereof.

The polymeric resin (A^{R}) might, in certain circumstances, be chemically cured by reaction with a curing agent. Such a curing agent may be disposed on the substrate surface(s) - in particular on the surface of the composite material - to which the curable composition is applied. However, it is preferred that at least a portion of the curing agent be dispersed within the composite material.

The present disclosure also provides a method of disbonding the bonded structure as defined hereinabove and in the appended claims, the method comprising the steps of: i) applying a voltage across said first electrically conductive substrate and said second electrically conductive substrate to form an anodic interface and a cathodic interface; and, ii) disbonding said first and second electrically conductive substrates.

In important embodiments of this method, the voltage applied in step i) is from 0.5 to 100 V and it is preferably applied for a duration of from 1 second to 60 minutes.

The type of substrates which may be bonded - and electrochemically disbonded - in the above captioned manner are not particularly limited. However, the bonding of electronic components - including but not limited to batteries - within encasements or to supportive structures is particularly envisaged.

In a further aspect of the disclosure, there is provided an article comprising: an electronic component provided with an electrically conductive exterior surface; a frame provided with an electrically conductive surface; and, an adhesive interposed between said electrically conductive exterior surface of said electronic component and said electrically conductive surface of the frame, wherein: said adhesive is electrochemically debondable and is obtained by applying a curable liquid-state composition to at least one of the electrically conductive exterior surface of the electronic component or the electronically conductive surface of said frame, followed by the curing of said composition; and, wherein the curable composition comprises a non-polymerizable electrolyte and a polymeric resin (A^{R}), wherein the article is characterized in that: the frame comprises an integrant (I^{F}) of a material possessing a volume electrical conductivity of less than 1 Sm⁻¹ and having an outer surface and an inner surface; a dried ink film (11^{F}) is disposed on the inner surface of said integrant (I^{F}), the dried ink film providing said electrically conductive surface of the frame; and, the dried ink film comprises: a continuous matrix of a polymeric resin (F^{R}); and, electrically conductive particles.

The disclosure also provides a method of disbonding the article as defined herein above, the method comprising the steps of:
i) applying a voltage across said electrically conductive exterior surface of said electronic component and said second electrically conductive surface of said frame to form an anodic interface and a cathodic interface; and,
ii) disbonding said electronic component and said frame.

In important embodiments of the above recited disbonding methods, the voltage applied in step i) is from 0.5 to 100 V and it is preferably applied for a duration of from 1 second to 60 minutes.

Where the aspects of the disclosure are described above as having certain embodiments, any one or more of those embodiments can be implemented in or combined with any one of the further embodiments, even if that combination is not explicitly described. Expressed differently, the described embodiments are not mutually exclusive, and permutations thereof remain within the scope of this disclosure.

### DEFINITIONS

As used herein, the singular forms "a", *"an"* and *"the"* include plural referents unless the context clearly dictates otherwise.

The terms *"comprising", "comprises"* and *"comprised* of" as used herein are synonymous with *"including", "includes", "containing"* or *"contains",* and are inclusive or open-ended and do not exclude additional, non-recited members, elements or method steps.

As used herein, the term *"consisting of*" excludes any element, ingredient, member or method step not specified. For completeness, the term "*comprising*" encompasses *"consisting of*"*.*

The words "*preferred*"*, "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word *"exemplary"* is used herein to mean serving as an example, instance, or illustration. Any aspect or design described herein as *"exemplary"* is not necessarily to be construed as preferred or advantageous over other aspects or designs. Rather, use of the word exemplary is intended to present concepts in a concrete fashion.

As used throughout this application, the word *"may"* is used in a permissive sense - that is meaning to have the potential to - rather than in the mandatory sense.

Spatially relative terms, such as *"inner", "outer",* "*top*", *"back", "above", "below",* "*left*", "*right*" and the like may be applicable herein to describe an component's relationship to another component(s) as illustrated in the figures. Obviously all such spatially relative terms refer to the orientation shown in the figures only for ease of illustration and are not necessarily limiting given that an assembly can assume orientations and configurations different from those illustrated in the figures when in use.

The term *"plurality"* as used herein is defined as two or more than two.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to* x" specifically includes 0 wt.%: the ingredient defined by said range may be absent from the material or may be present in the material in an amount up to x wt.%.

As used herein, room temperature is 23°C plus or minus 2°C. As used herein, *"ambient conditions"* means the temperature and pressure of the surroundings in which the composition is located or in which a coating layer or the substrate of said coating layer is located.

The molecular weights referred to in this specification can be measured with gel permeation chromatography (GPC) using polystyrene calibration standards, such as is done according to ASTM 3536.

Viscosities of the coating or ink compositions described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the coating or ink compositions are done using the No. 6 spindle at a speed of 20 revolutions per minute for 1 minute until the viscometer equilibrates. The viscosity corresponding to the equilibrium reading is then calculated using the calibration.

Where mentioned, a calculated glass transition temperature ("T_{g}") of a polymer or co-polymer is that temperature which may be calculated by using the Fox equation (T. G. Fox, Bull. Am. Physics Soc., Volume 1, Issue No. 3, page 123(1956)). The glass transition temperatures of certain homo-polymers may be found in the published literature, such as in *"*Polymer Handbook", edited by J. Brandrup and E. H. Immergut, Interscience Publishers.

The actual glass transition temperature (T_{g}) of a polymer can be determined by differential scanning calorimetry (DSC). The use of DSC to determine T_{g} is well known in the art, and is described by B. Cassel and M. P. DiVito in "Use of DSC To Obtain Accurate Thermodynamic and Kinetic Data", American Laboratory, January 1994, pp 14-19, and by B. Wunderlich in Thermal Analysis, Academic Press, Inc., 1990. The glass transition temperatures (T_{g}) specifically measured in the current patent application have been measured according to the methodology of Deutsches Institut für Normung (DIN) 11357.

The term *"softening point*" as used herein refers to the temperature at which a material, such as a polymer, loses its solid characteristics and becomes relatively fluid. A material's softening point as given herein is that temperature measured using the standard ball and ring method according to ISO 4625-1: 2004.

Unless otherwise stated, the term *"particle size"* refers to the largest axis of the particle. In the case of a generally spherical particle, the largest axis is the diameter.

The term *"mean particle size"* (Dᵥ50), as used herein, refers to a particle size corresponding to 50% of the volume of the sampled particles being greater than and 50% of the volume of the sampled particles being smaller than the recited Dᵥ50 value. Similarly, if used, the term "Dᵥ90" refers to a particle size corresponding to 90% of the volume of the sampled particles being smaller than and 10% of the volume of the sampled particles being greater than the recited Dᵥ90 value.

The term *"liquid"* herein means in a liquid state at room temperature and at atmospheric pressure. Analogously, the term *"solid"* means in a solid state at room temperature and at atmospheric pressure. Solid state is defined as the state of matter in which materials are not fluid but retain their boundaries without support, the atoms or molecules occupying fixed positions with respect to each other and unable to move freely.

The term *"dried"* as used herein with respect to a dried ink film refers to the partial or complete removal of the solvent from an ink composition to form a film therefrom. In particular, drying should comprise at least 90 wt.% or at least 95 wt.% of the total weight of solvent being removed from an ink composition. Drying is associated with coalescence of the polymeric resin(s) of the ink composition. It is not precluded that drying may be associated with curing and interpenetration of the polymeric resins, wherein curing refers to a chemical alteration of the constituent polymeric resins. The degree of coalescence of the polymeric resin(s) can be affected by the pressure and heat which is applied during drying.

As used herein, the term *"metallic"* encompasses elemental metal, metal alloys and metal composites. As exemplary metals and metallic alloys, mention may be made of: aluminum; aluminum alloys; bronze; beryllium; beryllium alloys; chromium; chromium alloys; cobalt; cobalt alloys; copper; copper alloys; gold; iron; iron alloys; steels; magnesium; magnesium alloys; nickel; nickel alloys; lead; lead alloys; tin; tin alloys, such as tin-bismuth and tin-lead; zinc; zinc alloys; and, superalloys, such as International Nickel 100 (IN-100) or International Nickel 718 (IN-718). Representative steels include: crucible steel; carbon steel; spring steel; alloy steel; maraging steel; and, stainless-steel, inclusive of austenitic stainless-steel, ferritic stainless-steel, duplex stainless-steel, and Martensitic stainless-steel.

Herein an *"electrically conductive"* component refers to any component through which an electrical current can flow and/or which can be configured in an electrical circuit. More particularly, the definition *"electrically conductive"* characterizes components having an electrical conductivity at room temperature of at least 1 × 10⁵ Sm⁻¹.

The terms *"surface electrical conductivity"* and *"volume electrical conductivity"* are used in accordance with their standard meanings given in ASTM D1711-22 *Standard Terminology Relating to Electrical Insulation.* Electrical conductivity may be measured in accordance with ASTM 257-14 (2021) *Standard Test Methods for DC Resistance or Conductance of Insulating Materials.*

The term *"electrically non-conductive substrate"* as used herein references a substrate having a volume electrical conductivity of less than 1 Sm⁻¹,typically less than 1 × 10⁻⁵ Sm⁻¹ or less than 1 × 10⁻⁸ Sm⁻¹.

The term *"carbon nanostructures"* refers to structures such as nanotubes, nanorods, nanocubes and nanodiamonds. The term also encompasses polymeric structures formed by nantotubes which are interdigitated and / or which share common walls: in such polymeric structures, carbon nanotubes may be deemed to represent the basic monomeric unit.

The term *"frame"* as used herein encompasses any rigid structure that provides structural support to an object, sin particular an electronic component. Whilst a frame may be configured in a variety of different shapes and configurations, the term encompasses rigid structures which may at least partially surround or enclose said objects.

An "*integrant*" of a frame or electronic component refers herein to a designated region thereof which is selected for the bonding of an adherend thereto. Whilst it is not precluded that the integrant may be disposed at the edge or corner of the frame or component, the integrant will more typically be a planer region. The integrant should possess structural integrity and thereby have the ability to bear load, including its own weight, whilst resisting breakage, bending or collapse.

The term "*electronic component*" denotes any component, member or apparatus which fulfils any electric, magnetic and/or electronic functionality. This means that electric, magnetic and/or electromagnetic signals may be applied to and/or generated by the electronic component during regular use. Exemplary electronic components include but are not limited to: batteries; battery cells; (micro)processors; signal processors; displays; capacitors; resistors; transistors; medical application devices, such as a glucose delivery device or an automatic defibrillator; global positioning system (GPS) receivers; sensors, such as biometric sensors, temperature sensors, moisture sensors, velocity sensors and accelerometers; and, antennas. The present disclosure has particular utility for the housing or framing of battery cells.

The term *"cure accelerator"* is intended herein to encompass any material which is a cure accelerator (or curing agent) for the (meth)acrylate functional compounds disclosed herein and, if applicable, for other ethylenically unsaturated monomers present in the composition. The accelerator may be of either the catalytic or reactive type.

*"Two-part (2K) compositions"* in the context of the present invention are understood to be compositions in which a first part (A) and a second part (B) must be stored in separate vessels because of their (high) reactivity. The two parts are mixed only shortly before application and then react, typically without additional activation, with bond formation and thereby formation of a polymeric network. Herein higher temperatures may be applied in order to accelerate the cross-linking reaction.

As used herein the term *"electrochemically debondable"* means that, after curing of the adhesive, the bond strength can be weakened by at least 50% upon application of an electrical potential of 1V for a duration of 60 minutes. The cured adhesive is applied between two substrates which are bonded by said adhesive so that an electric current is running through the adhesive bond line. Bond strength is measured by Tensile Lap Shear (TLS) test performed at room temperature and based upon ASTM D3163-01 *Standard Test Method for Determining Strength of Adhesively Bonded Rigid Plastic Lap-Shear Joints in Shear by Tension Loading.* The bond overlapping area for this determination should be 2.5 cm × 2.5 cm with a bond thickness of 0.1 cm (40 mil).

The term *"electrolyte"* is used herein in accordance with its standard meaning in the art as a substance containing free ions which can conduct electricity by displacement of charged carrier species. The term is intended to encompass molten electrolytes, liquid electrolytes, semi-solid electrolytes and solid electrolytes wherein at least one of the cationic or anionic components of their electrolyte structure is essentially free for displacement, thus acting as charge carrier.

The curable adhesive compositions of the present disclosure and the cured adhesives obtained therefrom possess *"electrolyte functionality"* in that the adhesive material permits the conduction of ions, either anions, cations or both. The electrolyte functionality is understood to derive from the ability of the compositions and cured adhesives to solvate ions of at least one polarity.

The term *"faradaic reaction"* means an electrochemical reaction in which a material is oxidized or reduced.

The term *"curing"* or *"cure"* refers herein to the hardening of a composition through reaction of compounds contained therein. Such reactions may include (co)polymerization reactions, crosslinking reactions and / or reactions with a curing agent present within or introduced into a curable composition.

As used herein, the term *"monomer"* refers to a substance that can undergo a polymerization reaction to contribute constitutional units to the chemical structure of a polymer. The term "*monofunctional*", as used herein, refers to the possession of one polymerizable moiety. The term *"polyfunctional",* as used herein, refers to the possession of more than one polymerizable moiety.

As used herein, the term *"epoxide"* denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term *"monoepoxide compound"* is meant to denote epoxide compounds having one epoxy group. The term *"polyepoxide compound"* is meant to denote epoxide compounds having at least two epoxy groups. The term *"diepoxide compound"* is meant to denote epoxide compounds having two epoxy groups.

The epoxide may be unsubstituted but may also be inertly substituted. Exemplary inert substituents include chlorine, bromine, fluorine and phenyl.

As employed herein a *"primary amino group"* refers to an NH₂ group that is attached to an organic radical, and a *"secondary amino group"* refers to an NH group that is attached to two organic radicals, which may also together be part of a ring. The term *"tertiary amine"* thus references a nitrogen bearing moiety of which a nitrogen atom is not bound to a hydrogen atom. Where used, the term *"amine hydrogen"* refers to the hydrogen atoms of primary and secondary amino groups.

As used herein, the term *"equivalent (eq.")* relates, as is usual in chemical notation, to the relative number of reactive groups present in the reaction. The term *"equivalent weight'* as used herein refers to the molecular weight divided by the number of a function concerned. As such, *"epoxy equivalent weight*" (EEW) means the weight of resin, in grams, that contains one equivalent of epoxy.

The "*amine equivalent weight*" is a calculated value (g/eq.) determined from the amine number. That amine number is determined by titration of the amine acetate ion by a dilute, typically 1N HCl solution. For a pure material, the amine number can be calculated using the molecular weights of the pure compound and KOH (56.1 g/mol). Instructive guidance may be found, for illustration, in https://dowac.custhelp.com/app/answers/detail/a_id/12987.

The term *"photoinitiator"* as used herein denotes a compound which can be activated by an energy-carrying activation beam - such as electromagnetic radiation - for instance upon irradiation therewith. The term is intended to encompass both photoacid generators and photobase generators. Specifically, the term *"photoacid generator"* refers to a compound or polymer which generates an acid for the catalysis of the acid hardening resin system upon exposure to actinic radiation. The term *"photobase generator"* means any material which when exposed to suitable radiation generates one or more bases.

The term *"Lewis acid"* used herein denotes any molecule or ion - often referred to as an electrophile - capable of combining with another molecule or ion by forming a covalent bond with two electrons from the second molecule or ion: a Lewis acid is thus an electron acceptor.

As used herein, "*(meth)acryl*" is a shorthand term referring to "*acryl*" and/or "*methacryl*". Thus the term *"(meth)acrylamide"* refers collectively to acrylamide and methacrylamide.

As used herein, "*C₁-Cₙ alkyl*" refers to a monovalent group that contains 1 to n carbons atoms, that is a radical of an alkane and includes straight-chain and branched organic groups. As such, "*C₁*-*C₄ alkyl*" refers to a monovalent group that contains from 1 to 4 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; and, tert-butyl. In the present invention, such alkyl groups may be unsubstituted or may be substituted with one or more halogen. Where applicable for a given moiety (R), a tolerance for one or more non-halogen substituents within an alkyl group will be noted in the specification.

The terms *"alkylene"* refers to a group that are radicals of a linear, branched or cyclic alkane, which group may be substituted or unsubstituted and may optionally be interrupted by at least one heteroatom.

The term "*C₁-Cₙhydroxyalkyl*" as used herein refers to an HO-(alkyl) group having from 1 to n carbon atoms, where the point of attachment of the substituent is through the oxygen-atom and the alkyl group is as defined above.

An *"alkoxy group"* refers to a monovalent group represented by -OA where A is an alkyl group: non-limiting examples thereof are a methoxy group, an ethoxy group and an iso-propyloxy group. The term *"alkoxylated"* as used herein means comprising at least one alkoxy group.

As used herein, "*C₂-C₆ alkenyl*" group refers to an aliphatic carbon group that contains 2 to 6 carbon atoms and at least one double bond disposed in any position. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having "cis" and "trans" configurations, or alternatively, "E" and "Z" configurations, as appreciated by those of ordinary skill in the art. In general, however, a preference for unsubstituted alkenyl groups containing from 2 to 6 (C₂-C₆) or from 2 to 4 (C₂-C₄) carbon atoms should be noted. And Examples of C₂-C₆ alkenyl groups include, but are not limited to: ethenyl; 1-propenyl; 2-propenyl; 1-methylethenyl; 1-butenyl; 2-butenyl; 4-methylbutenyl; 1-pentenyl; 2-pentenyl; 3-pentenyl; 4-pentenyl; 4-methyl-3-pentenyl; 1-hexenyl; 3-hexenyl; and, 5-hexenyl.

The term "*C₃-C₆ cycloalkyl*" as used herein means an optionally substituted, saturated cyclic hydrocarbon having 3-6 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Exemplary cycloalkyl groups include cyclopropyl, cyclobutyl, cyclopentyl or cyclohexyl groups.

As used herein, "*C₃-C₆ cycloalkylene"* means a divalent radical formed by the removal of two hydrogen atoms from one or more rings of a cycloalkyl group having from 3 to 6 carbon atoms.

As used herein, "*C₂-C₁₈ alkenyl*" refers to hydrocarbyl groups having from 2 to 18 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, "*E*" and "*Z*" configurations, as appreciated by those of ordinary skill in the art. Examples of said C₂-C₂₀ alkenyl groups include, but are not limited to: -CH=CH₂; - CH=CHCH₃; -CH₂CH=CH₂; -C(=CH₂)(CH₃); -CH=CHCH₂CH₃; -CH₂CH=CHCH₃; - CH₂CH₂CH=CH₂; -CH=C(CH₃)₂; -CH₂C(=CH₂)(CH₃); -C(=CH₂)CH₂CH₃; -C(CH₃)=CHCH₃; - C(CH₃)CH=CH₂; -CH=CHCH₂CH₂CH₃; -CH₂CH=CHCH₂CH₃, -CH₂CH₂CH=CHCH₃; - CH₂CH₂CH₂CH=CH₂; -C(=CH₂)CH₂CH₂CH₃; -C(CH₃)=CHCH₂CH₃; -CH(CH₃)CH=CHCH, - CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, an "*C₆-C₁₈ aryl*" group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present disclosure, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl.

As used herein, "*alkylaryl*" refers to alkyl-substituted aryl groups and *"substituted alkylaryl"* refers to alkylaryl groups further bearing one or more substituents as set forth above. Further, as used herein *"aralkyl"* means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. "*Heteroalkyl*", "*heterocycloalkyl*" and "*heteroaryl*" moieties are alkyl, cycloalkyl and aryl groups as defined hereinabove, respectively, containing N, O, Si or S as part of their structure.

The term "*heterocyclyl*" refers to a monovalent chain of carbon and heteroatoms, wherein the heteroatoms are selected from N, O, Si or S, a portion of which, including at least one heteroatom, form a ring.

The term *"substituted"* refers to substitution with at least one suitable substituent. For completeness: the substituents may connect to the specified group or moiety at one or more positions; and, multiple degrees of substitution are allowed unless otherwise stated. Further, the terms *"substitution"* or *"substituted with"* include the implicit proviso that such substitution is in accordance with permitted valence of the substituted atom and the substituent, and that the substitution results in a stable compound that does not spontaneously undergo transformation by, for instance, rearrangement, cyclization or elimination.

The term *"substantially free"* is intended to mean that the constituent, component, compound, moiety, functional group, element, ion or the like is not deliberately added to the subject material and is present, at most, in only trace amounts which will have no (adverse) effect on the desired properties of the material. As regards compositions, an exemplary trace amount is less than 1000 ppm by weight of the composition. The term *"substantially free"* encompasses those embodiments where the specified compound, moiety, functional group, element, ion, or other like component is completely absent from the subject material or is not present in any amount measurable by techniques generally used in the art.

The term *"anhydrous"* as used herein has equivalence to the term *"substantially free of water".* Water is not deliberately added to a given composition and is present, at most, in only trace amounts which will have no (adverse) effect on the desired properties of the composition.

### DETAILED DESCRIPTION OF THE INVENTION

### 1. Bonded Structure

The bonded structure of the present disclosure will be described with reference to the appended drawings in which:
Fig. 1a depicts a bonded structure in accordance with a first embodiment of the present invention.
Fig. 1b depicts the initial debonding of the structure of the first embodiment upon passage of a current across that structure.
Fig. 2a depicts a bonded structure in accordance with a second embodiment of the present invention.
Fig. 2b depicts the initial debonding of the structure of the second embodiment upon passage of a current across that structure.
Fig. 3a depicts a bonded structure in accordance with a third embodiment of the present invention.
Fig. 3b depicts the initial debonding of the structure of the second embodiment upon passage of a current across that structure.

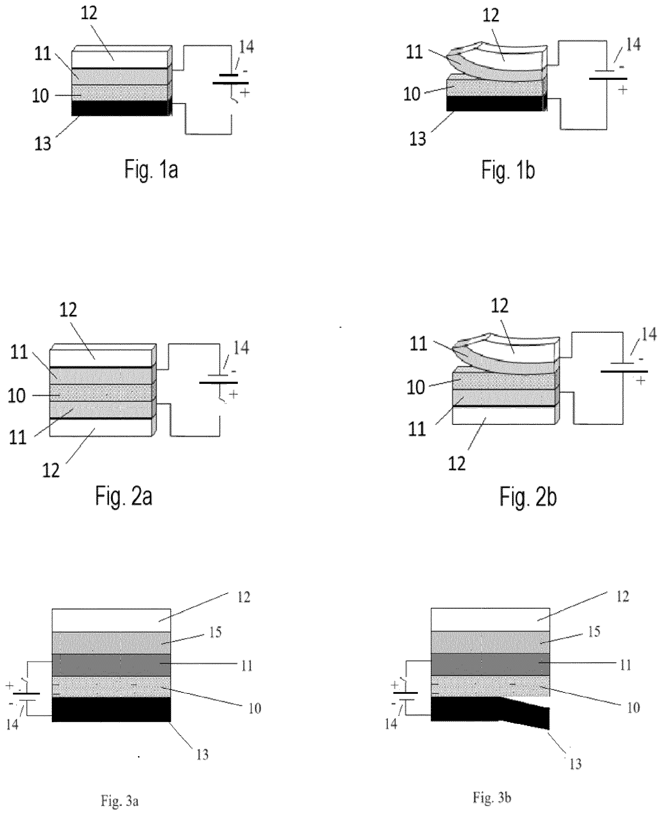

For each illustrated structure of Figures 1 and 3, the illustrated conductive substrate (13) is shown in the form of a layer which is a non-composite material which may be constituted by *inter alia*: a metallic film; a metallic mesh or grid; deposited metal particles; or, a conducting oxide. As exemplary conducting oxides there may be mentioned: doped indium oxides, such as indium tin oxide (ITO); doped zinc oxide; antimony tin oxide; cadmium stannate; and, zinc stannate. The selection of the conductive substrate (13) aside, the skilled artisan will recognize that the efficacy of the debonding operation may be diminished where the conductive substrates (13) are in the form of a grid or mesh which offers limited contact with the illustrated layers of cured electrochemically debondable adhesive (10).

As shown in Figure 1a appended hereto, a bonded structure is provided in which a layer of electrochemically debondable adhesive (10) is disposed between an electrically conductive substrate (13) and an electrically non-conductive substrate (12): such a layer of electrochemically debondable adhesive (10) may, for example, have a thickness of from 10 to 300 µm, for instance from 10 to 200 µm or from 15 to 150 µm. A dried ink film (11) as described herein is disposed upon the non-conductive substrate (12) to form the depicted bonded structure. The dried ink film (11) and the electrically conductive substrate (13) are in electrical contact with an electrical power source (14).

The composition of the electrically non-conductive substrate (12) is not particularly limited. Exemplary substrates (12) include polymeric substrates of which mention may be made of: polyolefins such as polyethylene and polypropylene; polyesters, such as polybutylene terephthalate (PBT) and polyethylene terephthalate (PET); polyamides; polyacrylonitrile; polyvinyl chloride; polyacrylates, such as polymethyl methacrylate; conjugated diene homopolymers, such as polychloroprene, polybutadiene and polyisoprene; copolymers of conjugated dienes; copolymers of conjugated dienes with aromatic vinyl compounds, such as copolymers of butadiene or isoprene with styrene; silicones; and, polyurethanes. It is also possible that the electrically non-conductive substrate (12) may be constituted by a polymer-wrapped metallic material. Further, the use of mineral and lignocellulosic materials in or as the electrically non-conductive substrate is not precluded.

A more complex bonded structure is depicted in Figure 2a wherein dried ink films (11) are respectively disposed upon two electrically non-conductive substrates (12). The layer of electrochemically debondable adhesive (10) is interposed between said dried ink films (11). Further, each dried ink film (11) is in electrical contact with an electrical power source (14). In this structure, the compositions of each dried ink film (11) may be the same or different. In the latter circumstance, the dried ink films may differ in one or more of: the composition of the matrix of polymeric resin; the composition of the electrically conductive particles; the physical properties of the electrically conductive particles; or, the loading of said particles within the dried ink film, as defined by weight or by volume.

Figure 3a depicts a bonded structure in accordance with a still further embodiment of the present disclosure. A dried ink film (11) is disposed between a layer of electrochemically debondable adhesive (10) and a layer of a fixative (15). That layer of fixative (15) provides adherence of the dried ink film (11) to the electrically non-conductive substrate (12) to form the depicted bonded structure. Similarly, the layer of cured electrochemically debondable adhesive (10) provides adherence to the conductive substrate (13). The dried ink film (11) and the conductive substrate (13) are in electrical contact with an electrical power source (14).

The fixative of layer (15) of Figures 3a and 3b should not be electrochemically debondable: save for this condition, the fixative of layer (15) is not particularly limited in composition but it should be operable or effective in the bonding of polymeric and other non-metallic substrates. Good results have been obtained where the fixative of layer (15) is obtained by the curing of a composition selected from: two-part (2K) polyurethane adhesive compositions; two-part (2K) epoxy adhesive compositions; or, thermally conductive adhesive compositions. And illustrative commercial products having utility in forming the fixative layer (15) include Teroson EP 5065 and Teroson PU 6700 available from the Henkel Corporation. In certain embodiments, the fixative layer (15) should have a thickness of from 10 to 300 µm, for instance from 10 to 200 µm or from 15 to 150 µm.

For completeness, it is noted that the curable electrochemically debondable adhesive from which layer (10) is derived and the composition from which the fixative layer (15) is derived may be independently cured. Alternatively, the respective compositions may be simultaneously cured where the operable curing conditions for each composition are compatible.

In certain embodiments, spacers (*not shown*) may be interposed between the dried ink film (11) and the electrically non-conductive substrate (12). Any spacer should conventionally be detachable from the adherends without damaging said elements of the bonded structure. For surety, such spacers are optional and may be absent in certain variants of the bonded structure. However, spacers can serve to firmly fix the spatial relationship between the non-conductive substrate (12) and the dried ink film (11) and, in doing so, moderate the effects of vibrations and impacts to which a bonded structure might be subjected either *per se* or when included as a component of a larger article of manufacture. This is particularly germane for structures which are to be disposed within portable electronic devices or within vehicles where vibration and jolting can displace adherends.

Where more than one spacer is present, the two spacers may be identical but it is not precluded that individual spacers may possess different geometries and / or be comprised of different materials. Moreover, a given spacer need not be unitary but may comprise a plurality of elements provided this does not compromise the mechanical strength of the spacer or diminish the support role thereof. Still further, the number of spacers and the disposal of the spacers within the fixative layer (15) may be moderated to optimize that support function. The spacers may be disposed at the extremities of the fixative layer (15); alternatively or additionally said spacers may interrupt the fixative layer (15).

The spacers should preferably be formed from electrically insulating materials which are flame retardant, which possess a suitable hardness and which are suited to meet impact strain requirements, for example by providing shock absorption or flexure for a support system. A Shore A hardness of from 20 to 95, for instance from 30 to 90 might be mentioned in this context. Glass spacers have been utilized in certain circumstances. Also, exemplary polymeric materials having utility as spacers include but are not limited to: polyvinyl chloride; polyalkylenes, such as polyethylene and polypropylene; polyacrylates such as polymethyl methacrylate; conjugated diene homopolymers, such as polychloroprene, polybutadiene and polyisoprene; copolymers of conjugated dienes; copolymers of conjugated dienes with aromatic vinyl compounds, such as copolymers of butadiene or isoprene with styrene; silicones; and, polyurethanes. A preference for injection moldable polymeric materials may be noted.

The electrical power source (14) may be a battery or an AC-driven source of direct current (DC). The positive and negative terminals of that power source (14) are shown in Figures 1 to 3 in one fixed position but the skilled artisan will of course recognize that the polarity of the system can be reversed.

When an electrical voltage is applied either between the electrically conductive substrate (13) and the dried ink film (11) - as depicted in Figure 1b and 3b - or between the two dried ink films (11) as depicted in Figure 2b, current is supplied to the electrochemically debondable adhesive (10) disposed therebetween. This induces electrochemical reactions at the interface of either the conductive substrate (13) or the dried ink film (11) and the adhesive (10), which electrochemical reactions are understood as oxidative at the positively charged or anodic interface and reductive at the negatively charged or cathodic interface. The reactions are considered to weaken the adhesive bond therebetween allowing the easy removal of the debondable composition from the substrate.

As depicted in Figures 1b, 2b and 3b, the debonding occurs at the negative interface, that interface between the adhesive (10) and either the dried ink film (11) or the electrically conductive substrate (13) that is in electrical contact with the negative electrode. By reversing current direction prior to separation of the substrates, the adhesive bond may be weakened at both interfaces of the cured adhesive (10).

It is however noted that the composition of the layer (10) of adhesive may be moderated so that debonding occurs at either the positive or negative interface or simultaneously from both. For some embodiments, a voltage applied across both surfaces so as to form an anodic interface and a cathodic interface will cause debonding to occur simultaneously at both the anodic and cathodic adhesive / substrate interfaces. In an alternative embodiment, reversed polarity may be used to simultaneously disbond both substrate / adhesive interfaces if the composition does not respond at both interfaces to direct current. The current can be applied with any suitable waveform, provided that sufficient total time at each polarity is allowed for debonding to occur. Sinusoidal, rectangular and triangular waveforms might be appropriate in this regard and may be applied from a controlled voltage or a controlled current source.

Without intention to limit the present invention, it is considered that the debonding operation may be performed effectively where at least one and preferably both of the following conditions are instigated: a) an applied voltage of from 0.5 to 200 V; and, b) the voltage being applied for a duration of from 1 second to 120 minutes, for example from 1 second to 30 minutes. Where the release of the substrates from the cured adhesive is to be facilitated by the application of a force - exerted via a weight or a spring, for instance - the potential might only need to be applied for the order of seconds.

As discussed above, the illustrated bonded structure may have utility in the bonding of electronic components either to one another or to a frame, which frame may optionally be disposed within an assembly comprising a plurality of electronic components in order to position or constrain one or more of said electronic components. Such an assembly may, for example, be provided with an encasement or other supporting arrangement in order to mitigate impacts or compressive, tensile, torsional, shear or bending stresses imposed thereon. The assembly will contain electrical interconnects which enable a voltage to be applied across electrically conductive surfaces provided on the frame and electronic component(s) thereof. The requisite power source to provide this potential difference may be disposed within the encasement or external to the encasement.

By way of example, it is envisaged that the bonded structure may serve to debondably fix one or more electronic components to a frame disposed within a phone encasement. The debondable fixing of a battery within such a phone encasement may be specifically mentioned.

Having regard to Figure 1a, the non-conductive substrate (12) may be provided by an integrant (I^{F}) of the frame of an article of manufacture: that article further comprises at least one electronic component provides the conductive substrate (13). A dried ink film (11^{F}) may be disposed on that integrant (I^{F}) to provide that frame with an electrically conductive surface. The debondable adhesive (10) is disposed between the dried ink film (11^{F}) and the electrically conductive substrate (13) provided by the electronic component. Moreover, optionally - and as depicted in Figure 3a - a layer of fixative may be provided on the frame to provide adherence between the integrant (I^{F}) thereof and the dried ink film (11^{F}).

Extending this utility of the bonded structure to Figure 2a, a second non-conductive substrate (12) may be provided by an integrant (I^{C}) of an electronic component provided within the article. A dried ink film (11^{C}) may be disposed on that integrant (I^{C}) to provide the electronic component with an electrically conductive surface. The debondable adhesive (10) is disposed between the dried ink films respectively provided by the frame (11^{F}) and electronic component (11^{C}).

### 1.1 Dried Ink Film (11)

Each dried ink film (11) comprises: a) a matrix of a polymeric resin; and, b) electrically conductive particles. The disposal of the electrically conductive particles within the polymeric resin matrix should form semi-continuous or continuous conductive pathways which extend through the body of the dried ink film (11). These pathways should thereby provide a low resistance route by which electrons and, in some instances thermal phonons, can travel through the dried ink film (11). The dried ink film (11) itself should be continuous, by which is meant that there are no discontinuities or gaps in the film within the two-dimensional area to which the film is applied.

It is preferred for the dried ink film (11) to be electrically conductive in all three dimensions and thus across its width, length and thickness: as is known in the art, electrical resistance measurements may be taken on a surface of the dried ink film using a probe, such as a 4-point probe, connected to an ohmmeter. Independently of or additional to this dimensional conductivity preference, it is preferred that the dried ink film (11) has a sheet resistance of from 5 to 100 Ohm/sq/mil, preferably from 7 to 50 Ohm/sq/mil, and more preferably from 10 to 30 Ohm/sq/mil, wherein the sheet resistance is measured according to ASTM D257.

The formation of conductive pathways in the dried ink film should be determinative of the loading of the electrically conductive particulates within that film. In addition, the loading of said particulates may be selected to attain operable density, and operable rheological and adhesive properties of the dried ink film (11).

In certain embodiments, the dried ink film may comprise, based on the total weight of the film: a matrix of polymeric resin; and, from 0.5 to 75 wt.% of electrically conductive particles disposed in said matrix, wherein said electrically conductive particles are characterized by a bulk resistivity of less than 50 microohm-centimeters (µΩ-cm). For example, the dried ink film may comprise, based on the weight of the film: a matrix of polymeric resin; and, from 5 to 75 wt.%, preferably from 15 to 75 wt.% of said electrically conductive particles.

In an alternate expression which is not intended to be mutually exclusive of that given above, the dried ink film may comprise, based on the volume of the film: a matrix of polymeric resin; and, from 5 to 90 vol.% of electrically conductive particles disposed in said matrix, wherein said electrically conductive particles are characterized by a bulk resistivity of less than 50 microohm-centimeters (µΩ-cm). For example, the dried ink film may comprise, based on the volume of the film: a matrix of polymeric resin; and, from 10 to 75 vol.%, preferably from 30 to 70 vol.% of said electrically conductive particles.

The distribution of the electrically conductive particles within the matrix resin may be homogeneous or non-homogeneous. In certain situation, it may be beneficial for the concentration of particulates to vary across a dimension, in the particular the thickness, of the dried ink film. The variation may permit specific loci of the dried ink film to exhibit higher relative electrical conductivity and, potentially, thermal conductivity. Such variation should not however compromise the structural integrity of the dried ink film by, for instance, reducing hardness or tensile strength of the film.

Broadly, there is no particular intention to limit the shape of the electrically conductive particles in the dried ink film: particles that are fibrous, acicular, spherical, ellipsoidal, cylindrical, bead-like, cubic or platelet-like may be used alone or in combination. Moreover, it is envisaged that agglomerates of more than one particle type may be used.

Equally, there is no particular intention to limit the size of the particles employed as conductive fillers. And, for surety, it is noted that suitable electrically conductive particles for use in the present invention may be a mixture of particles having a small particle size and particles having a larger particle size. However, such electrically conductive particles will conventionally have a median particle size by volume (Dᵥ50), as measured by laser diffraction / scattering methods, of from 300 nm to 50 µm, for example from 500 nm to 40 µm or from 500 nm to 30 µm. In the aforementioned measurement method, the particle size is measured by particle size analyser and the particle shape is analysed by scanning electron microscope. In short, scattered laser lights from the particles are detected an array of detectors. Theoretical calculation is carried out to fit the measured distribution of scattered light intensity. During the fitting process, the particle size distribution is deduced and *inter alia* Dᵥ50 and Dᵥ90 values are calculated accordingly.

Additionally or alternatively to the aforementioned median particle size, said electrically conductive particles should typically be characterized by a density of less than 5 g/cm³.

In a further independent characterization of the electrically conductive particles, which may or may not compliment the aforementioned median particle size and / or density characterizations, it is preferred that the electrically conductive particles have a tap density of from 0.5 to 6.0 g/cm³, preferably from 0.5 to 5.5 g/cm³ and more preferably from 0.5 to 5.0 g/cm³ as determined in accordance to ISO 3953 using a 25 cm³ graduated glass cylinder. The principle of the method specified is tapping a specified amount of powder in a container by means of a tapping apparatus until no further decrease in the volume of the powder takes place. The mass of the powder divided by its volume after the test gives its tap density.

Exemplary non-fibrous, electrically conductive particles which may be present in the dried ink film, either alone or in combination, include: metallic flakes; metallic powders; milled or ground metallized glass; silicon; silicon dioxide; germanium; selenium; carbon black; graphene; fullerene; graphite; and, carbon nanostructures.

In an embodiment, at least a portion of the electrically conductive particles of the dried ink film are selected from the group consisting of: silver, silver coated copper; silver coated graphite; silver coated polymers; silver coated aluminium; silver coated glass; and, mixtures thereof. Silver is particularly preferred because of its good electrical performance. Conversely, silver coated particles might gain preference because of their lower cost as compared to silver *per se.* However, in such silver coated or silver plated particles, the silver coating or plating should substantially and preferably wholly coat the underlying particulate material. Alternatively or additional to that requirement, the quantity of silver in the silver coated particle should preferably be from 10 to 70 wt.%, for example from 10 to 65 or 60 wt.% based on the total weight of the electrically conductive particles.

By way of illustration only, suitable commercially available electrically conductive particles based on silver include, but are not limited to: AA3462, AA-5124, AA-192N, C-1284P, C-0083P and P543-14 silver particles, available from Metalor; KP84, KP74 and KP29 silver particles, available from Ames Goldsmidth; CGF-DAB-121B silver coated copper particles, available from Dowa; AgCu0810 or AgCu0305 silver coated copper particles, available from Ames Goldsmidth; CONDUCT-O-FIL^{™} SG15F35 silver coated glass, available from Potters Industries Inc.; the silver coated polymers Spherica^{™} Ag-30-01, Spherica^{™} Ag-10-01 and Spherica^{™} Ag-4-01 available from Conpart AS; silver coated graphite available as P594-5 from Metalor; and, silver coated aluminium available as CONDUCT-O-FIL^{™} SA325S20 from Potters Industries Inc.

The use of conductive carbon blacks as at least a portion of the electrically conductive particles of the dried ink film is of particular interest. Additionally or alternatively, the use of graphite as at least a portion of the electrically conductive particles of the dried ink film is of interest. And in certain embodiments, the electrically conductive particles of the dried ink film comprise a mixture of graphite and carbon black, preferably wherein the ratio by weight of graphite to carbon black is from 1:1 to 5:1 or from 2:1 to 4:1. A particular preference may be noted for the use of a mixture of graphite and carbon black, wherein the ratio by weight of graphite to carbon is 2.5:1 to 3.5: 1, for example 3:1. The combination of graphite and carbon black as the electrically conductive particles is considered to provide good conductivity at the conventional thickness of dried ink film.

Suitable carbon blacks having utility in the present disclosure should be characterized by at least one of:
i) a specific surface area of from 30 to 1400 m²/g, preferably from 100 to 700 m²/g and more preferably from 150 to 350 m²/g, as determined by low temperature nitrogen absorption in accordance with ASTM D 3037-78;
ii) a pore volume of from 1 to 4 ml/g as determined by mercury porosimetry;
iii) a pore diameter of from 25 to 1000 Angstroms, as determined by mercury porosimetry; and,
iv) an oil absorption number from 70 to 500 ml/100g, preferably from 100 to 300 ml/100g and more preferably from 150 to 200 ml/100g, as determined in accordance with ASTM D2414.

These characterizations are not mutually exclusive and one, two three or four of them may be applicable to a given carbon black having utility in the present disclosure.

Exemplary commercial conductive carbon blacks which may have utility herein include: Black Pearls 2000^{®}, Vulcan^{®} XC-72, Vulcan^{®}3C and Vulcan^{®} C available from Cabot Corporation; Ensaco 250G, available from from Imerys and; Ketjenblack^{®}, available from Nouryon.

Particulate graphite having utility in the present disclosure should possess a Dᵥ90 particle size by volume, as measured by laser diffraction / scattering methods, of from 1 µm to 75 µm, preferably from 2 µm to 45 µm, more preferably from 3 µm to 25 µm and even more preferably 3 µm to 10 µm. Additionally or alternatively to the aforementioned particle size, the particulate graphite should possess a specific surface area, as determined by low temperature nitrogen absorption in accordance with ASTM D 3037-78, of from 0.25 to 25 m²/g, preferably from 4 to 22 m²/g and more preferably from 7 to 21 m²/g.

Exemplary commercially available graphites for use in the present disclosure invention include but are not limited to: Timrex SFG6 from TIMCAL Graphite & Carbon; and, Graphite Pure 200-09 available from Asbury.

The use of carbon nanotubes as at least a portion of the electrically conductive particles is also of interest. As used herein, the term *"carbon nanotube"* refers to carbon fullerene, a synthetic graphite, which typically has a molecular weight of greater than 840 g/mole. The term is intended to encompass roped carbon nanotubes, single-walled carbon nanotubes (SWNT), multiple walled carbon nanotubes (MWNT): single walled carbon nanotubes typically have diameters of from 1 to 5 nm whilst multi-walled carbon nanotubes typically have diameters of from 5 to 200 nm. It is further envisaged that carbon nanotubes having utility herein may be opened or chopped, for which US Patent No. 7,641,829 B2 provides an instructive reference. And still further, the present invention does not preclude the use of carbon nanotubes which have been chemically modified through, for example doping with thionyl chloride (SOCl₂) or carbon nanotubes which have been coated with, for example metallic materials which enhance the conductivity of the nanotubes. For completeness, exemplary commercial providers of carbon nanotubes are: Unidym Inc.; and, Carbon Nanotechnologies, Inc.

It is not precluded that the electrically conductive particles of the dried ink film may comprise or consist of conductive fibers. It is preferred that the conductive fibers are characterized by least one of the following parameters: an aspect ratio of from 5 to 2000, preferably from 20 to 2000; a mean length of from 1 to 20 mm, for instance from 1 to 15 mm; and, a mean diameter of from 1 to 50 µm, preferably from 5 to 25 µm. These characterizations of the conductive fiber are not mutually exclusive: the fibers may meet one, two or three thereof.

Examples of electrically conductive fibers, which may be present in the dried ink film alone or in combination, include but are not limited to:
a) Fibers of conductive metals such as copper (Cu), iron (Fe), nickel (Ni), cobalt (Co), aluminum (Al), silver (Ag), gold (Au), palladium (Pd), platinum (Pt), ruthenium (Ru), rhodium (Rh), alloys thereof and combinations thereof. Exemplary alloys include nickel alloys and iron alloys and specific mention may be made of the use of stainless-steel fibers and monel fibers. Moreover, exemplary combinations of the metals and alloys include but are not limited to: multifilament fibers in which individual filaments comprise different metals or alloys; and, fibers in which a metal or alloy is used to plate or coat a distinct metal or alloy. As regards the latter combination, mention may be made of: silver-plated copper fibers; nickel-clad copper fibers; tin-plated, copper-clad steel fibers; and tin-clad copper fibers.
b) Electrically conductive fibers obtained by modifying electrically insulating polymeric fibers through, for example, incorporating a conductivity-imparting agent into the polymeric fiber or imparting a metallic plating or coating onto a polymeric fiber core. The constituent polymer(s) of the fibers should be characterized by a softening point that is higher - and preferably at least 10°C or at least 20°C higher - than the softening point of the polymer which forms the matrix of the dried ink film. This enables the matrix to be subjected to a temperature above its softening point, in a molding operation for instance, without melting the metallized polymeric fibers.
c) Carbon fibers, in particular graphite fibers.
d) Fibers obtained by imparting a metallic plating or coating to a non-polymeric, non-metal fiber core, such as a graphite or glass fiber core. Mention in this regard may be made of: nickel plated graphite fibers of which a commercial example is Cycom^{®} fiber available from Solvay; and silver coated glass fibers of which a commercial example includes CONDUCT-O-FIL SF82TF20 available from Potters Industries.

The aforementioned metals and alloys (a)) are candidate conductivity imparting agents for incorporation within or coating of non-metallic fibers: the choice of metal or alloy may be based on both functionality or economy, noting that the cost of precious metals may limit or preclude their use. In those embodiments where a conductive fiber is obtained by applying a metal or alloy coating to a non-metallic core, it is preferred the coating is continuous on the surface of the fiber. Further, the metal or alloy coating should preferably have a thickness of from 0.1 to 100 microns, for example from 0.1 to 50 microns.

The electrically insulating polymeric fibers (b)) may comprise natural polymers, synthetic polymers or combinations thereof. Illustrative synthetic insulating polymeric fibers include: polyolefin fibers, such as polyethylene and polypropylene fibers; polyester fibers; polyacrylate fibers; polyamide fibers, such as nylon and aramid fibers; and, polyimide fibers. Illustrative natural insulating polymeric fibers include polysaccharide fibers, such as fibers of cellulose, starch and fibroin. As regards fibers of type b), mention may be made of coated nylon fibers, coated polyacrylate fibers and coated polyethylene fibers, wherein the coating is selected from silver, gold, nickel, aluminium, iron or steel.

The term *"carbon fiber"* (c) above) herein refers to a fiber of which carbon constitutes at least 95 wt.%, based on the weight of the fiber. As is known in the art, carbon fibers may be classified by the precursors from which are they are derived. Polyacrylonitrile (PAN), pre-oxidized polyacrylonitrile, isotropic-pitch- and mesophase-pitch-based carbon fibers are produced by the wet (solution) spinning of each precursor followed by oxidative stabilization and carbonization (or graphitization) at a temperature up to 1300°C. Vapor-grown carbon fibers are prepared by thermal decomposition of a hydrocarbon vapor, such as methane (CH₄), in which method oxidative stabilization is not needed. There is no intention in the present disclosure to limit the precursor from which the carbon fibers are obtained.

Irrespective of precursor, carbon fibers having utility in the dried ink film should be characterized by a diameter of from 5 to 25 µm. At diameters above 25 µm, the specific surface area of the fiber may be reduced to the extent that it compromises the compositing of the fibers.

Exemplary commercial carbon fibers having utility herein include: Pyrograf^{®} III carbon fibers, available from Pyrograf Products Inc; and, Thornel^{®} carbon fibers, available from Solvay.

As noted above, the dried ink film of the present disclosure comprises a matrix of polymeric resin. It is preferred that this polymeric resin has a melting temperature of at least 100°C, preferably at least 125°C.

Exemplary polymeric resins from which the matrix may be formed - and which may be used alone or in combination - include but are not limited to: nitrocellulose resins; epoxy resins; phenolic resins; polycarbonate; polystyrene; acrylonitrile butadiene styrene copolymers (ABS); styrene acryloniitrile copolymers (SAN); styrene butadiene styrene copolymers; styrene ethylene propylene styrene copolymers; polyvinyl chloride; polyvinylidene fluoride (PVDF); polyolefins, such as polypropylene, polyethylene, and polybutylene; polyamide; polyimide; polyamideimide; polyether imide; polyethylene terephthalate; polybutylene terephthalate; polyethylene naphthalate; polyacrylates, such as polymethyl methacrylate; ethylene butyl acrylate copolymers; polyacrylonitrile; polyetherketone; polyarylketone; polyethersulfone (PES); polyarylsulfone; polysulfone; polyphenylene sulfide; polyurethane; polyurea; polybenzoxazole; polyoxadiazol; polybenzothiazole; polybenzimidazole; polypyridine resin; polytriazole; polypyrrolidone; polydibenzofuran resin; and, polyphosphazene.

In an embodiment, the matrix resin of the dried ink film is chosen from: nitrocellulose; epoxy resins; phenolic resins; polyurethane; polyacrylates; and, mixtures thereof.

As illustrated in the appended drawings, the dried ink film is disposed upon a non-conductive substrate (12). Typically, such disposal will be effected by the application of a solvent-borne composition comprising the matrix resin and the electrically conductive particles onto the non-conductive substrate followed by the evaporative drying of the applied composition. The constituent solvent of the solvent-borne composition will be selected to both dissolve the matrix resin well and to lead to a uniform layer formation upon evaporation.

The amount of solvent is in part determined by the mode of application of the composition, in particular the viscosity tolerance of that mode. Conventionally, the solvent-borne composition should have a viscosity from 0.1 to 30 Pa·s as measured according with ISO 3219 using a rheometer at a constant shear rate of 15-s with a 20 mm plate-plate configuration (0.2 mm gap, 60 sec., 25°C). A particularly suitable viscosity for screen- and roto-screen printing is from 2 to 30 Pa·s. A particularly suitable viscosity for rotogravure or flexographic printing is from 0.5 to 4 Pa·s.

Viscosity aside, it is also considered that significant dilution of the matrix resin may adversely affect the conductivity of the dried ink film obtained from the solvent-borne composition. Thus conventionally, the solvent content will be from 40 to 90 wt.%, based on the weight of the composition.

The solvent-borne composition may be prepared by mixing the components together. Preferably the mixing is performed in a pebble mill or a tri-roll mill to prevent aggregation of the electrically conductive particles through the action of either grinding with pebbles or passage through the three rolls turning against one other.

Prior to applying the solvent-borne ink compositions, it is often advisable to pre-treat the relevant surfaces to remove foreign matter therefrom: this step can, if applicable, facilitate the subsequent adhesion of the compositions thereto. The ink compositions are then applied to the preferably pre-treated surfaces of the non-conductive substrate (12) by conventional application methods such as: bar coating; doctor-blade application; printing methods, including stencil printing, screen printing, rotogravure printing, roto screen printing and flexographic printing; and, spraying methods, including but not limited to air-atomized spray, air-assisted spray, airless spray and high-volume low-pressure spray.

It is recommended that the ink compositions be applied to a surface at a wet film thickness of from 10 to 500 µm. The application of thinner films within this range is more economical and provides for a reduced likelihood of deleterious thick cured regions. However, great control must be exercised in applying thinner coatings so as to avoid the formation of discontinuous layers.

The drying and, if applicable, the curing of the applied solvent-borne ink compositions typically occurs at a temperature of from 20°C to 120°C, preferably from 40°C to 80°C. The temperature that is suitable depends on the non-conductive substrate (12) and the specific compounds, particularly solvents, present. That said, the temperature required to ensure a desired drying rate can be determined in the individual case by the skilled artisan, using simple preliminary tests if necessary. Of course, drying and, if applicable, curing at lower temperatures within the aforementioned ranges is advantageous as it obviates the requirement to substantially heat or cool the non-conductive substrate (12) and therefore permits the use of more delicate substrates.

It is considered that the dried ink film may be applied in either a single stage or multi-stage manner to obtain an overall thickness of the dried ink film of from 10 to 200 µm, for example from 20 to 100 µm. In the multi-stage application, the dried ink film will be constituted by a plurality of thin sub-layers having, for instance, a dry-layer thickness of from 5 to 50 µm. It is considered, however, that intra-layer cohesion forces may be more practicable within a dried ink film provided as a single layer.

### 1.1.1 Exemplary Embodiment of a Solvent-Borne Ink Composition

In an exemplary embodiment the dried ink film is obtained from an ink composition comprising: a) a nitrocellulose resin; b) electrically conductive particles comprising graphite and carbon black, wherein the ratio by weight of the graphite to the carbon black is from 1:1 to 5:1; c) a solvent; and, d) a di- or multi-functional isocyanate, wherein the ratio by weight of the electrically conductive particles to resin is from 0.20:1 to 4:1.

For illustration, the dried ink film may be obtained from an ink composition comprising, based on the weight of the composition: from 2 to 25 wt.%, preferably from 3 to 23 wt.% and more preferably from 4 to 21 wt.% of a) said nitrocellulose resin; from 3 to 45 wt.%, preferably from 4 to 43 wt.% and more preferably from 4.75 to 41 wt.%. of b) electrically conductive particles, said electrically conductive particles comprising graphite and carbon black, wherein the ratio by weight of the graphite to the carbon black is from 1:1 to 5:1; c) solvent; and, from 0.5 to 9 wt.%, preferably from 0.5 to 7 wt.% and more preferably from 0.75 to 6 wt.% of d) said di- or multi-functional isocyanate, wherein the ratio by weight of the electrically conductive particles to resin is from 0.20:1 to 4:1, preferably from 0.25:1 to 3:1.

An illustrative, commercially-available nitrocellulose resin for use in this embodiment is NC-E560 (30 wt.% solution in isopropanol) available from Dow Chemical.

Exemplary solvents for use in this embodiment include at least compound chosen from: toluene; ethanol; isopropyl alcohol; n-propanol; ethyl acetate; n-propyl acetate; n-butyl acetate; isobutyl acetate; isopropyl acetate; methyl ethyl ketone; methyl isobutyl ketone; 2-butoxy ethyl acetate; water; 2-(2- butoxyethoxy)ethanol; [2-(2-butoxyethoxy)-ethyl]acetate; 2-butoxyethanol; isophorone; 3,3,5-trimethyl-2-cyclohexene-1-one; dimethyl succinate; dimethyl glutarate; dimethyl adipate; acetic acid; 1-methoxypropan-2-ol; 1-methoxy-2-propylacetate; dipropylene glycol (mono)methyl ether; glycol ethers; ethoxy propanol; and, mixtures thereof. A preference for the use of 2-butoxy ethyl acetate in or as the solvent may be mentioned.

The constituent di- or multi-functional isocyanate may be an aliphatic isocyanate or an aromatic isocyanate. Preferably the di- or multi-functional isocyanate is chosen from: methylene diphenyl diisocyanate; hexamethylene diisocyanate; toluene diisocyanate; 1,5-naphthalene diisocyanate; isophorone diisocyanate; xylylene diisocyanate; paraphenylene diisocyanate; 1,3,6-hexamethylene triisocyanate; bicycloheptane triisocyanate; and, mixtures thereof. A preference for the use of methylene diphenyl diisocyanate may be mentioned.

A suitable commercially available di- or multi-functional isocyanate for use in this embodiment is Desmodur VKS 20, available from Covestro.

### 1.2 Cured Adhesive Layer (10)

The or each adhesive layer (10) is obtained by the curing of a curable, liquid-state composition, examples of which will be described herein below. The curable, liquid-state composition has electrolyte functionality and comprises: a non-polymerizable electrolyte; a polymeric resin (A^{R}); and, optionally additive and adjunct materials.

To form a curable, liquid-state composition, the below-described parts are brought together and mixed. As is known in the art, to form one part (1K) curable compositions, the elements of the composition are brought together and homogeneously mixed under conditions which inhibit or prevent the reactive components from reacting: as would be readily comprehended by the skilled artisan, this might include mixing conditions which limit or prevent exposure to irradiation or which limit or prevent the activation of a constituent latent catalyst. As such, it will often be preferred that the curative elements are not mixed by hand but are instead mixed by machine - a static or dynamic mixer, for example - in pre-determined amounts under anhydrous conditions without intentional photo-irradiation.

For the two part (2K) curable, liquid-state compositions, the reactive components are brought together and mixed in such a manner as to induce the hardening thereof. For both one (1K) and two (2K) part compositions, the reactive compounds should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers.

For small-scale applications in which volumes of less than 2 liters will generally be used, the preferred packaging for the two-part (2K) compositions will be side-by-side double cartridges or coaxial cartridges, in which two tubular chambers are arranged alongside one another or inside one another and are sealed with pistons: the driving of these pistons allows the components to be extruded from the cartridge, advantageously through a closely mounted static or dynamic mixer. For larger volume applications, the two parts of the composition may advantageously be stored in drums or pails: in this case, the two parts are extruded via hydraulic presses, in particular by way of follower plates, and are supplied via pipelines to a mixing apparatus which can ensure fine and highly homogeneous mixing of the hardener and binder components. In any event, for any package it is important that the binder component be disposed with an airtight and moisture-tight seal, so that both components can be stored for a long time, ideally for 12 months or longer.

Non-limiting examples of two-part dispensing apparatuses and methods that may be suitable for the present invention include those described in U.S. Patent No. 6,129,244 and US Patent No. 8,313,006.

In accordance with the broadest process aspects of the present disclosure, the above described curable, liquid-state compositions are applied to electrically conductive surface(s) (11, 13) and then cured *in situ* to provide the depicted adhesive layer (10). Prior to applying the curable compositions, it is often advisable to pre-treat the relevant surfaces to remove foreign matter there from: this step can, if applicable, facilitate the subsequent adhesion of the compositions thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

In some embodiments, the adhesion of the applied compositions to the preferably pre-treated substrate surface may be facilitated by the application of a primer thereto. Indeed primer compositions may be necessary to ensure efficacious fixture and / or cure times of the compositions on inactive substrates. Whilst the skilled artisan will be able to select an appropriate primer, instructive references for the choice of primer include but are not limited to: US Patent No. 3,855,040; US Patent No. 4,731,146; US Patent No. 4,990,281; US Patent No. 5,811,473; GB 2502554; and, US Patent No. 6,852,193.

The curable, liquid-state compositions are then applied to the preferably pre-treated, optionally primed surfaces of the substrate by conventional application methods such as: brushing; roll coating; doctor-blade application; printing methods; and, spraying methods, including but not limited to air-atomized spray, air-assisted spray, airless spray and high-volume low-pressure spray.

The curable, liquid-state composition may be applied to at least one and preferably to each of the surfaces which are to be bonded: the surfaces are then subsequently contacted, optionally under the application of pressure, such that the composition is interposed between the surfaces.

It is recommended that the curable, liquid-state compositions be applied to a surface at a wet film thickness of from 10 to 500 µm. The application of thinner layers within this range is more economical and provides for a reduced likelihood of deleterious thick cured regions. However, great control must be exercised in applying thinner coatings or layers so as to avoid the formation of discontinuous cured films.

The curing of the applied compositions of the disclosure typically occurs at temperatures in the range of from 40°C to 200°C, preferably from 50°C to 190°C, and in particular from 60°C to 180°C. The temperature that is suitable depends on the specific compounds, including accelerators, present. That said, the temperature required to ensure a desired curing rate can be determined in the individual case by the skilled artisan, using simple preliminary tests if necessary. Of course, curing at lower temperatures within the aforementioned ranges is advantageous as it obviates the requirement to substantially heat or cool the mixture from the usually prevailing ambient temperature. Where applicable, however, the temperature of the mixture formed from the respective elements of the composition may be raised above the mixing temperature and / or the application temperature using conventional means, including microwave induction.

In certain circumstances, the heating of the curable compositions should be conducted under an inert gas atmosphere: suitable inert gases which may be mentioned include nitrogen, helium and argon. Precaution should be used when common nitrogen gases are used as a blanket, because such nitrogen may not be dry enough on account of its susceptibility to moisture entrainment; the nitrogen may require an additional drying step before use herein.

For surety, it is noted that the curable, liquid-state composition from which the electrochemically debondable adhesive layer (10) is derived and the composition from which a fixative layer (15) - when present - is derived may be independently cured. Alternatively, the respective compositions may be simultaneously cured where the operable curing conditions for each composition are compatible.

### 1.2.1 Non-Polymerizable Electrolyte

The curable, liquid-state composition comprises from 0.1 to 30 wt.%, based on the weight of the composition, of non-polymerizable electrolyte: said non-polymerizable electrolyte may preferably constitute from 1 to 20 wt.%, for example from 5 to 15 wt.% of the composition.

Important electrolytes include the non-polymerizable salts of: ammonium; pyridinium; pyrrolidinium; phosphonium; imidazolium; oxazolium; guanidinium; and, thiazolium. In exemplary embodiments, the electrolyte of the present disclosure comprises at least one salt having a Formula selected from the group consisting of: 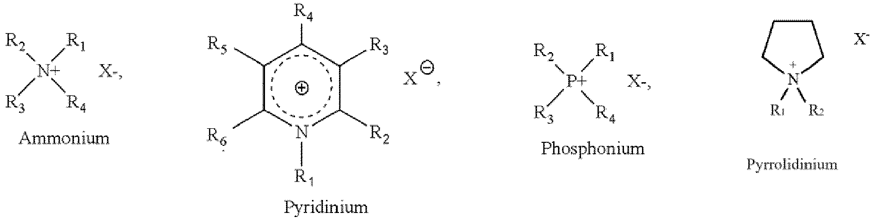 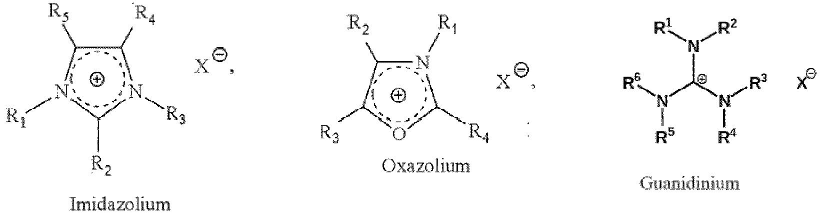 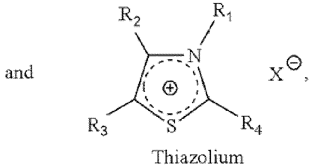 wherein:
R₁, R₂, R₃, R₄, R₅ and R₆ are independently selected from hydrogen, C₁-C₁₈ alkyl, C₃-C₁₈ cycloalkyl, C₆-C₁₈ aryl, C₇-C₂₄ aralkyl, C₂-C₂₀ alkenyl, -C(O)R^{q}, -C(O)OH, -CN or - NO₂;
R^{q} is C₁-C₆ alkyl; and,
X⁻ is a counter anion.

Where an ammonium salt is used, it may be subject to the proviso that at most three and desirably at most two of the groups R₁ to R₄ may be hydrogen.

As regards said moieties R₁ to R₆, the terms C₁-C₁₈ alkyl, C₃-C₁₈ cycloalkyl, C₆-C₁₈ aryl, C₇-C₂₄ aralkyl, C₂-C₂₀ alkenyl expressly include groups wherein one or more hydrogen atoms are substituted by halogen atoms (e.g. C₁-C₁₈ haloalkyl) or hydroxyl groups (e.g. C₁-C₁₈ hydroxyalkyl). In particular, it is preferred that R₁, R₂, R₃, R₄, R₅ and R₆ are independently selected from hydrogen, C₁-C₁₂ alkyl, C₁-C₁₂ haloalkyl, C₁-C₁₂ hydroxyalkyl or C₃-C₁₂ cycloalkyl. For example, R₁, R₂, R₃, R₄, R₅ and R₆ may be independently selected from hydrogen, C₁-C₆ alkyl, C₁-C₆ haloalkyl or C₁-C₆ hydroxyalkyl.

There is no particular intention to limit the counter anion (X-) which may be employed in the non-polymerizable electrolyte. Exemplary anions may be selected from:
- Halides;
- Pseudohalides and halogen-containing compounds of the formulae PF₆ ⁻, CF₃SO₃ ⁻, (CF₃SO₃)₂N⁻, CF₃CO₂ ⁻ and CCl₃CO₂ ⁻,
- CN⁻, SCN⁻ and OCN⁻;
- Phenates;
- Sulfates, sulfites and sulfonates of the general formulae SO₄ ²⁻, HSO₄ ⁻, SO₃ ²⁻, HSO₃ ⁻, R^{a}OSO₃ ⁻ and R^{a}SO₃ ⁻;
- Phosphates of the general formulae PO₄ ³⁻, HPO₄ ²⁻, H₂PO₄ ⁻, R^{a}PO₄ ²⁻, HR^{a}PO₄ ⁻ and R^{a}R^{b}PO₄ ⁻;
- Phosphonates and phosphinates of the general formulae R^{a}HPO₃ ⁻,R^{a}R^{b}PO₂ ⁻ and R^{a}R^{b}PO₃ ⁻;
- Phosphites of the general formulae: PO₃ ³⁻, HPO₃ ²⁻, H₂PO₃ ⁻, R^{a}PO₃ ²⁻, R^{a}HPO₃ ⁻ and R^{a}R^{b}PO₃ ⁻;
- Phosphonites and phosphinites of the general formulae R^{a}R^{b}PO₂ ⁻, R^{a}HPO₂ ⁻, R^{a}R^{b}PO⁻ and R^{a}HPO⁻;
- Carboxylic acid anions of the general formula R^{a}COO⁻;
- Hydroxycarboxylic acids anions and sugar acid anions;
- Saccharinates (salts of o-benzoic acid sulfimide);
- Borates of the general formulae BO₃ ³⁻, HBO₃ ²⁻, H₂BO₃ ⁻, R^{a}R^{b}BO₃ ⁻, R^{a}HBO₃ ⁻, R^{a}BO₃ ²⁻, B(OR^{a})(OR^{b})(OR^{c})(OR^{d})⁻, B(HSO₄)⁻ and B(R^{a}SO₄)⁻;
- Boronates of the general formulae R^{a}BO₂ ²⁻ and R^{a}R^{b}BO⁻;
- Carbonates and carbonic acid esters of the general formulae HCO₃ ⁻, CO₃ ²⁻ and R^{a}CO₃ ⁻;
- Silicates and silicic acid esters of the general formulae SiO₄ ⁴⁻, HSiO₄ ³⁻, H₂SiO₄ ²⁻, H₃SiO₄ ⁻, R^{a}SiO₄ ³⁻, R^{a}R^{b}SiO₄ ²⁻, R^{a}R^{b}R^{c}SiO₄ ⁻, HR^{a}SiO₄ ²⁻, H₂R^{a}SiO₄ ⁻ and HR^{a}R^{b}SiO₄ ⁻;
- Alkyl- and arylsilanolates of the general formulae R^{a}SiO₃ ³⁻, R^{a}R^{b}SiO₂ ²⁻, R^{a}R^{b}R^{c}SiO⁻, R^{a}R^{b}R^{c}SiO₃ ⁻, R^{a}R^{b}R^{c}SiO₂ ⁻ and R^{a}R^{b}SiO₃ ²⁻;
- Pyridinates and pyrimidinates;
- Carboxylic acid imides, bis(sulfonyl)imides and sulfonylimides of the general formulae: 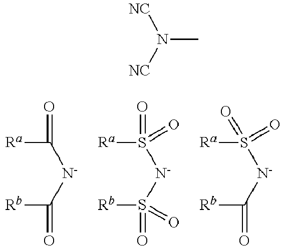
- Methides of the general formula: 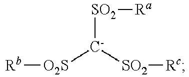
- Alkoxides and aryloxides of the general formula R^{a}O⁻; or,
- Sulfides, hydrogen sulfides, polysulfides, hydrogen polysulfides and thiolates of the general formulae S²⁻, HS⁻, [Sᵥ]²⁻, [HSᵥ]⁻ and [R^{a}S]⁻
in which general formulae
v is a whole positive number of from 2 to 10.
R^{a}, R^{b}, R^{c} and R^{d} are independently selected from hydrogen, halogen, C₁-C₁₂ alkyl, C₅-C₁₂ cycloalkyl, C₅-C₁₂ heterocycloalkyl, C₆-C₁₈ aryl or C₅-C₁₈ heteroaryl.

Based on the definitions in the above list, preferred anions are selected from the group consisting of: halides; pseudohalides and halogen-containing compounds as defined above; carboxylic acid anions, in particular formate, acetate, propionate, butyrate and octanoate; hydroxycarboxylic acid anions, such as lactate; pyridinates and pyrimidinates; carboxylic acid imides, bis(sulfonyl)imides and sulfonylimides; sulfates, in particular methyl sulfate and ethyl sulfate; sulfites; sulfonates, in particular methanesulfonate; and, phosphates, in particular dimethyl-phosphate, diethyl-phosphate and di-(2-ethylhexyl)-phosphate.

The electrolyte is preferably selected from the group consisting of 1-ethyl-3-methyl-1H-imidazol-3-um methanesulfonate, 1-ethyl-3-methyl-1H-imidazol-3-um methyl sulfate, 1-hexyl-3-methylimidazolium 2-(2-fluoroanilino)-pyridinate, 1-hexyl-3-methylimidazolium imide, 1-butyl-1-methyl-pyrrolidinium 2-(2-fluoroanilino)-pyridinate, 1-butyl-1-methyl-pyrrolidinium imide, trihexyl (tetradecyl) phospholium 2-(2-fluoroanilino)-pyridinate, cyclohexyltrimethylammonium bis (trifluormethylsulfonyl) imide, di(2-hydroxyethyl) ammonium trifluoroacetate, N,N-dimethyl (2-hydroxyethyl) ammonium octanoate, methyltrioctylammonium bis (trifluoromethylsulfonyl) imide, tributylmethylammonium bis(fluorosulfonyl)imide, N-ethyl-N-N-N-N-tetramethylguanidinium trifluoromethanesulfonate, guanidinium trifluoromethanesulfonate, 1-butyl-4-methylpyridinium bromide, 1-butyl-3-methylpyridinium tetrafluoroborate, 1-butyl-3-hydroxymethylpyridinium ethylsulfate, N-propyl-N-methylpyrrolidinium bis(fluorosulfonyl) imide, 1-butyl-1-methylpyrrolidinium bis(trifluoromethylsulfonyl) imide, 1-butyl-methylpyrrolidinium tris (pentafluoroethyl) trifluorophosphate, 3-methyl imidazolium ethylsulfate, 1-ethyl-3-methylimidazolium chloride, 1-ethyl-3-ethyl-methylimidazolium bromide, 1-butyl-3-methylimidazolium chloride, 1-hexyl-3-methylimidazolium chloride, 1-octyl-3-methylimidazolium chloride, 1-methyl-3-octylimidazolium chloride, 1-propyl-3-methylimidazolium iodide, 1-butyl-3-methylimidazolium tetrafluoroborate, 1-butyl-3-methylimidazolium methyl sulfate, 1-butyl-3-methylimidazolium methanesulfonate, 1-butyl-3-methylimidazolium trifluoromethanesulfonate, 1-butyl-3-methylimidazolium hexafluorophosphate, 1-ethyl-3-methylimidazolium bis(trifluoromethylsulfonyl)imide, 1-butyl-3-methylimidazolium bis(trifluoromethylsulfonyl)imide, 1-ethyl-3-methylimidazolium trifluoromethanesulfonate, 1-butyl-3-methylimidazolium bis(fluorosulfonyl)imide, 1-ethyl-3-methylimidazolium bis(fluorosulfonyl)imide, 1-butyl-3-methyl-imidazolium-fluorosulfonate, 1-dodecyl-3-methylimidazolium bis(fluorosulfonyl)imide, 1-butyl-2,3-dimethylimidazolium tetrafluoroborate, 1-butyl-2,3-dimethylimidazolium hexafluorophosphate, 1-butylimidazol, 1-methylimidazolium tetrafluoroborate, tributylmethylphosphonium bis(fluorosulfonyl)imide, tetrabutylphosphonium tris (pentafluoroethyl) trifluorophosphate, trihexyl(tetradecyl)phosphonium bis(trifluoromethylsulfonyl)imide, trihexyl (tetradecyl) phosphonium tetrafluoroborate, tributylmethylphosphonium methyl sulfate and mixtures thereof.

A particular preference may be mentioned for the use of at least one of trihexyl(tetradecyl)phosphonium bis(trifluoromethylsulfonyl)imide, tributylmethylphosphonium bis(fluorosulfonyl) imide, tributylmethyl- phosphonium methyl sulfate, tributylmethylammonium bis(fluorosulfonyl)imide, N-propyl-N-methylpyrrolidinium bis(fluorosulfonyl) imide, 1-ethyl-3-methyl-1H-imidazol-3-um methyl sulfate, 1-ethyl-3-methyl-1H-imidazol-3-um methanesulfonate, 1-ethyl-3-methylimidazolium trifluoromethanesulfonate, 1-ethyl-3-methylimidazolium bis(trifluoromethylsulfonyl)imide, 1-butyl-3-methylimidazolium methyl sulfate, 1-butyl-3-methylimidazolium methanesulfonate, 1-butyl-3-methyl-imidazolium-fluorosulfonate, 1-butyl-3-methylimidazolium trifluoromethanesulfonate, 1-butyl-3-methylimidazolium bis(trifluoromethylsulfonyl)imide, 1-butyl-3-methylimidazolium bis(fluorosulfonyl)imide and 1-dodecyl-3-methylimidazolium bis(fluorosulfonyl)imide.

### 1.2.2 Additives and Adjunct Ingredients

The curable, liquid-state compositions of the present disclosure will typically further comprise adjuvants and additives that can impart improved properties to these compositions. For instance, the adjuvants and additives may impart one or more of: improved elastic properties; improved elastic recovery; longer enabled processing time; faster curing time; and, lower residual tack. Included among such adjuvants and additives are: catalysts; solubilizers; tougheners; plasticizers; stabilizers including UV stabilizers; antioxidants; wax; reactive diluents; dessicants or moisture scavengers; adhesion promoters; fungicides; flame retardants; rheological adjuvants; color pigments or color pastes; solvents; and, non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than 40 wt.% of the total composition and preferably should not comprise more than 30 wt.% of the composition.

As the present disclosure envisages the utility of both one (1K) and two (2K) part curable compositions, it is noted for completeness that, in general, adjunct materials and additives which contain reactive groups will be blended into the appropriate part of a two part (2K) composition to ensure the storage stability thereof; unreactive materials may be formulated into either or both of the two parts.

Suitable classes of solubilizer include: polyphosphazenes; polymethylenesulfides; polyoxyalkylene glycols; polyethylene imines; silicone surfactants, such as polyalkylsiloxane and polyoxyalkylene modified polydimethylsiloxanes including but not limited to poly(C₂-C₃)oxyalkylene modified polydimethylsiloxanes; polpolyhydric alcohols; and, sugars. For completeness, fluorinated silicone surfactants, such as fluorinated polysilanes, are intended to be encompassed within the term silicone surfactants.

Polyhydric alcohols and sugars having utility as solubilizers and which may be used alone or in combination, include, but are not limited to: ethylene glycol, 1,3-propanediol, cyclohexandiol, hydroquinone, catechol, resorcinol, phloroglucinol, pyrogallol, hydroxyhydroquinone, tris(hydroxymethyl)benzene, tris(hydroxymethyl)benzene with three methyl or ethyl substituents bonded to the remaining benzene carbon atoms, isosorbide, isomannide, isoidide, glycerol, cyclohexane-1,2,4-triol, 1,3,5-cyclohexanetriol, pentane-1,2,3-triol, hexane-1,3,5-triol, erythritol, 1,2,4,5-tetrahydroxybenzene, threitol, arabitol, xylitol, ribitol, mannitol, sorbitol, inositol, fructose, glucose, mannose, lactose, 1,1,1-tris(hydroxymethyl)propane, 1,1,1-tris(hydroxymethyl)ethane, di(trimethylolpropane), trimethylolpropane ethoxylate, 2-hydroxymethyl-1,3-propanediol, pentaerythritol allyl ether and pentaerythritol.

Of the polyoxyalkylene glycols, a particular preference for the use of polyoxy(C₂-C₃)alkylene glycols having a weight average molecular weight of from 200 to 10000 g/mol, for example 200 to 2000 g/mol, may be noted.

The presence of tougheners in the curable, liquid-state composition can, in certain circumstances, be advantageous to the debonding of the obtained cured adhesive. Without intention to be bound by theory, tougheners can facilitate phase separation within the cured adhesive under the application of electrical potential. In an exemplary embodiment, the adhesive of the present invention might thus comprise from 0.1 to 10 wt.%, based on the weight of the composition, of a polybutadiene based toughener. Exemplary commercial polybutadiene based tougheners include Poly bd^{®} R20 LM and Poly bd^{®} 15 HT available from Cray Valley.

The curable, liquid-state composition of the present disclosure may comprise a rheology control agent. Said rheology control agent should preferably consist of: electrically non-conductive fillers; electrically conductive fillers; or, mixtures thereof.

Broadly, there is no particular intention to limit the shape of the particles employed as non-conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as non-conductive fillers. However, such non-conductive fillers will conventionally have an average volume particle size, as measured by laser diffraction / scattering methods, of from 0.1 to 1500 µm, for example from 1 to 1250 µm.

Exemplary non-conductive fillers include but are not limited to calcium carbonate, calcium oxide, calcium hydroxide (lime powder), precipitated and/or pyrogenic silica, zeolites, bentonites, wollastonite, magnesium carbonate, diatomite, barium sulfate, alumina, clay, talc, titanium oxide, iron oxide, zinc oxide, sand, quartz, flint, mica, glass beads, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added.

When present, pyrogenic and/or precipitated silica should desirably have a BET surface area of from 10 to 90 m²/g: when such silicas are used, they do not cause any additional increase in the viscosity of the applied composition, but do contribute to strengthening the cured adhesive obtained therefrom. It is likewise conceivable to use pyrogenic and/or precipitated silica having a higher BET surface area, advantageously from 100 to 250 m²/g as a filler: because of the greater BET surface area, the effect of strengthening the cured composition is achieved with a smaller proportion by weight of silica.

Also suitable as non-conductive fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Non-conductive fillers which impart thixotropy to the composition from which the adhesive is cast may be preferred for many applications: such fillers are also described as rheological adjuvants, e.g. hydrogenated castor oil, fatty acid amides, or swellable plastics such as PVC.

There is equally no particular intention to limit the shape of the particles which may be employed as conductive fillers: particles that are acicular, spherical, ellipsoidal, cylindrical, bead-like, cubic or platelet-like may be used alone or in combination. Moreover, it is envisaged that agglomerates of more than one particle type may be used. Moreover, there is no particular intention to limit the size of the particles employed as conductive fillers. However, such conductive fillers will conventionally have a median particle size by volume (Dv50), as measured by laser diffraction / scattering methods, of from 0.1 to 1500 µm, for example from 1 to 1250 µm.

Exemplary conductive particulate fillers include, but are not limited to: silver; copper; gold; palladium; platinum; nickel; gold or silver-coated nickel; carbon black; carbon fiber; carbon nanostructures; graphite; aluminum; indium tin oxide; silver coated copper; silver coated aluminum; metallic coated glass spheres; metallic coated filler; metallic coated polymers; silver coated fiber; silver coated spheres; antimony doped tin oxide; conductive nanospheres; nano silver; nano aluminum; nano copper; nano nickel; and, mixtures thereof. The use of particulate silver and / or carbon black as the conductive filler is preferred.

The desired viscosity of the curable, liquid-state composition may be determinative of the total amount of rheology control agent used. Having regard to that consideration, the total amount of rheology control agent present should not prevent the composition from being readily applicable by the elected method of application of the composition. For example, compositions which are intended to be extrudable from a suitable dispensing apparatus, such as a tube, should possess a viscosity of from 1000 to 150,000, preferably from 10,000 to 100,000 mPas.

In an alternative expression, which is not intended to be mutually exclusive of that given immediately above, the rheology control agent is desirably present in the curable, liquid-state composition in an amount of from 5 to 50 wt.%, preferably from 5 to 30 wt.%, based on the total weight of the composition.

The addition of certain additives may promote the adhesion of the curable, liquid-state composition - and the cured adhesive obtained therefrom - to particular substrates. In this regard, the curable, liquid-state composition may comprise from 0 to 5 wt.%, for example from 0.5 to 5 wt.% based on the weight of the composition, of at least one adhesion promoter.

In certain embodiments, the adhesion promoter may be selected from the group consisting of: morin(2-(2,4-dihydroxy phenyl)-3,5,7-trihydroxy-4H-1-cumarone-4-ketone); 3,7-dihydroxy-2-naphthoic acid (3,7-dihydroxy naphthlene-2-carboxylic acid); pyrogallol carboxylic acid (2,3,4-trihydroxybenzoic acid); 3,4-dihydroxy-benzene guanidine-acetic acid; gallic acid (3,4,5-trihydroxybenzoic acid); para-aminosalicylic acid (4-amino-2-hydroxybenzoic acid, PAS); flutter acid (4,4'-methylene-bis(3-hydroxy-2-naphthoic acid)); citric acid (2-hydroxypropane-1,2,3-tricarboxylic acid); and, mixtures thereof. Of these compounds a preference for the use - alone or in combination - of citric acid, gallic acid and, in particular, para-aminosalicylic acid (PAS) may be mentioned.

As alternative adhesion promoters there may be mentioned: (meth)acrylic acid; Ebecryl 168, methacrylated acidic adhesion promoter commercially available from Radcure Corporation; Esstech PL-2152, methacrylate based adhesion promoter, available from Esstech; Ebecryl 170, acrylated acidic adhesion promoter commercially available from Radcure Corporation; β-carboxyacrytate; Sartomer CN 704, acrylated polyester adhesion promoter available from Sartomer Corporation; and, CD9050, monofunctional acid ester CD 9052, available from Sartomer Corporation; CD 9052, trifunctional acid ester commercially available from Sartomer Corporation; 2-(methacryloyloxy)ethyl succinate (HEMA succinate); and, zinc diacrylate.

A *"plasticizer"* for the purposes of this disclosure is a substance that decreases the viscosity of the curable, liquid-state composition and thus facilitates its processability. Herein the plasticizer may constitute up to 10 wt.% or up to 5 wt.%, based on the total weight of the composition, and is preferably selected from the group consisting of: diurethanes; ethers of monofunctional, linear or branched C4-C16 alcohols, such as Cetiol OE (obtainable from BASF); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

*"Stabilizers"* for purposes of this disclosure are to be understood as antioxidants, UV stabilizers, thermal stabilizers or hydrolysis stabilizers. Herein stabilizers may constitute *in toto* up to 5 wt.% or up to 1 wt.%, based on the total weight of the curable, liquid-state composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

Dependent upon the polymer resin (A^{R}) present, stabilizers may be employed to control, inhibit or prevent premature activation of a free radical initiator: they might, for instance, inhibit or prevent (hydro)peroxide decomposition. Exemplary stabilizers having this functionality include hydroquinones, benzoquinones, naphthoquinones, phenanthroquinones, anthraquinones and substituted compounds thereof. Various phenols may also be used as stabilizers, such as 2,6-di-t-butyl-4-methyl phenol.

In order to enhance shelf life even further, it is often advisable to further stabilize the curable, liquid-state compositions of the present disclosure with respect to moisture penetration through using dessicants. Examples of suitable desiccants or moisture scavengers include, but are not limited to: silica gel; anhydrous calcium sulfate (anhydrite); calcium sulfate dihydrate (gypsum); calcium oxide; montmorillonite clay; molecular sieves such as those including natural or synthetic zeolite; and, activated alumina.

Waxes having utility in the present disclosure should have a softening point of from 50 to 150°C and may include one or more of: polyethylene having a number average molecular weight (Mn) from 500 to 7500; petroleum waxes, such as paraffin wax and microcrystalline wax; synthetic waxes made by polymerizing carbon monoxide and hydrogen, such as Fischer-Tropsch wax; polyolefin waxes including functionalized polyolefin waxes of which maleated polyethylene, maleated polypropylene and maleated poly(ethylene-co-propylene) may be mentioned as examples; and, hydrogenated animal, fish or vegetable oils.

A need also occasionally exists to lower the viscosity of the curable, liquid-state composition according to the present disclosure for specific applications, by using reactive diluent(s). The total amount of reactive diluents present will typically be from 0 to 10 wt.%, for example from 0 to 5 wt.%, based on the total weight of the composition.

The presence of solvents and non-reactive diluents in the curable, liquid-state compositions is also not precluded where this can usefully moderate the viscosities thereof. For instance, but for illustration only, the compositions may contain one or more of: alkyl acetate solvents such as ethyl acetate, n-propyl acetate, butyl acetate, n-butyl acetate, propylene glycol monomethyl ether acetate and methoxypropyl acetate (MPA); alkyl propionate solvents such as n-butyl propionate and n-pentyl propionate; dibasic esters such as dimethyl succinate, dimethyl glutarate, dimethyl adipate; (di)alkyl carbonate solvents such as ethylene carbonate, propylene carbonate (PC), dimethyl carbonate (DMC), ethyl methyl carbonate (EMC) and diethyl carbonate (DEC); ethers such as tetrahydrofuran, dioxane and dimethoxyethane; glycol ether solvents such as ethylene glycol dimethyl ether, ethylene glycol diethyl ether, ethylene glycol dibutyl ether, ethylene glycol diphenyl ether, diethylene glycol, diethylene glycol-monomethyl ether, diethylene glycol-monoethyl ether, diethylene glycol-mono-n-butyl ether, diethylene glycol dimethyl ether, diethylene glycol diethyl ether, diethylene glycoldi-n-butylyl ether, propylene glycol butyl ether, propylene glycol phenyl ether, dipropylene glycol, dipropylene glycol monomethyl ether, dipropylene glycol dimethyl ether and dipropylene glycoldi-n-butyl ether; amide solvents dimethyl acetamide and N-methylpyrrolidone; ketone solvents such as acetone, diisobutyl ketone, isobutyl heptyl ketone, isophorone, methyl ethyl ketone, methyl n-amyl ketone and methyl isobutyl ketone; toluene; xylene; diphenylmethane; diisopropylnaphthalene; petroleum fractions such as Solvesso^{®} products (available from Exxon); and, chlorohydrocarbon solvents such as 4-chlorotrifluoromethylbenzene and 3,4-bis(dichloro)trifluoromethylbenzene.

The above aside, it is preferred that solvents and non-reactive diluents constitute *in toto* less than 15 wt.%, in particular less than 10 wt.%, based on the total weight of the composition.

### 1.2.3 Polymeric Resin (A^{R})

As described above, the cured, electrochemically debondable adhesive (10) of the bonded structure comprises a polymeric resin (A^{R}). That resin provides the continuous phase of the cured adhesive in which the non-polymerizable electrolyte is dispersed.

Illustrative polymeric resins include: thermoplastic synthetic resins, such as polyolefin resins, EVA (ethylene-vinyl acetate copolymer) resins, vinyl acetate resins, vinyl acetate copolymers, ionomer resins, acrylic resins, acrylic copolymers, cyanoacrylate resins, vinyl chloride resins, polyvinyl acetal resins, polyurethane resins, polyester resins and polyamide resins; thermosetting synthetic resins such as acrylic resins, acrylic-epoxy hybrid resins, maleimide resins, urea resins, melamine resins, phenolic resins, epoxy resins, epoxy-phenolic hybrid resins, polyurethane resins, urethane prepolymers, polyurethane-epoxy hybrid resins, polyester resins and diallyl phthalate resins; and, moisture-curing resins such as urethane prepolymers and modified silicone resins.

For completeness, urethane prepolymers are reaction products obtained by reacting a polyol with a polyisocyanate compound such that there is a stoichiometric excess of isocyanate (NCO) groups with respect to hydroxyl (OH) groups). Further, exemplary modified silicone resins include polymers having (C₂-C₆)alkylene oxide monomer units on the main chain and having at least one hydrolyzable silicon-containing group per molecule.

It is preferred that the cured electrochemically debondable adhesives of the present disclosure comprise a polymeric resin (A^{R}) chosen from: epoxy resins; acrylic resins; polyurethane resins; acrylic-epoxy hybrid epoxy resins; polyurethane-epoxy hybrid resins; and, mixtures thereof. Such polymeric resins (AR) are a necessary component of the curable, liquid state compositions from which the adhesive layer (10) is obtained. Further details of curable, liquid state compositions containing said polymer resins (A^{R}) will be provided herein below.

### 1.2.3.1 Epoxy Based Matrix Resin Systems

The polymeric resin (A^{R}) of the curable, liquid state composition may be based on epoxide compounds.

As such, there may be provided a curable one-part (1K) composition comprising: a non-polymerizable electrolyte; a rheology control agent; at least one epoxide compound; and, a curing agent consisting of one or more compounds which have at least one epoxide reactive group; wherein the composition is characterized by a molar ratio of epoxide-reactive groups to epoxide groups of from 0.6:1 to 1.2: 1, for example from 0.95: 1 to 1.1: 1.

In important embodiments of the disclosure, the one-part (1K) composition may comprise, based on the weight of the composition: from 2 to 25 wt.%, preferably 5 to 20 wt.% of said electrolyte; from 1 to 50 wt.%, preferably from 2 to 25%, of rheology control agent, from 20 to 70 wt.%, preferably 20 to 60 wt.% of said at least one epoxide compound; from 0.1 to 15 wt.%, preferably from 1 to 15%, of curing agent; and, from 0 to 15 wt.%, preferably from 0.1 to 10 wt.% of accelerator, wherein the composition is characterized by a molar ratio of epoxide-reactive groups to epoxide groups from 0.6:1 to 1.2: 1, for example from 0.75: 1 to 1.1: 1.

In the alternative, there may be provided a curable two-part (2K) composition comprising: a first part comprising: a non-polymerizable electrolyte; and, at least one epoxide compound; and, a second part comprising: a curing agent consisting of at least one compound possessing at least two epoxide reactive groups per molecule, wherein said composition further comprises a rheology control agent and further wherein the composition is characterized by a molar ratio of epoxide-reactive groups to epoxide groups from 0.6:1 to 1.2: 1, for example from 0.95: 1 to 1.1: 1. For completeness, the rheology control agent may be disposed in one or both parts of the composition.

In important embodiments of the invention, the two-part (2K) composition comprises, based on the weight of the composition, from 2 to 25 wt.%, preferably 5 to 20 wt.% of said electrolyte; from 1 to 50 wt.%, preferably from 2 to 25%, of rheology control agent, from 20 to 70 wt.%, preferably 20 to 60 wt.% of said at least one epoxide compound; from 0.1 to 15 wt.%, preferably from 1 to 15%, of curing agent; and, from 0 to 15 wt.%, preferably from 0.1 to 10 wt.% of accelerator, wherein the composition is characterized by a molar ratio of epoxide-reactive groups to epoxide groups from 0.6:1 to 1.2: 1, for example from 0.75: 1 to 1.1: 1.

Notably, the molar ratio of epoxide-reactive groups to epoxide groups of 1:1 is included within the above mentioned stated ranges. A highly preferred molar ratio of epoxide-reactive groups to epoxide groups provides for an excess of epoxide reactive groups and is from 0.75:1 to 0.95:1. For surety the term epoxide reactive groups includes latent reactive groups which are therefore included in the molar ratio term.

### Epoxide Compounds

Epoxide compounds as used herein may include mono-functional epoxide compounds, multi- or polyfunctional epoxide compounds, and combinations thereof. Part a) of the composition may be constituted by a single epoxide compound but equally may be mixtures of epoxide functional compounds, including mixtures of compounds having different numbers of epoxide groups per molecule. An epoxide compound may be saturated or unsaturated, aliphatic, cycloaliphatic, aromatic or heterocyclic and may be substituted. Further, the epoxide compound may also be monomeric or polymeric.

Illustrative monoepoxide compounds include: alkylene oxides; epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and α-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monoepoxide compounds for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an embodiment, the monoepoxide compound conforms to Formula (E) herein below: 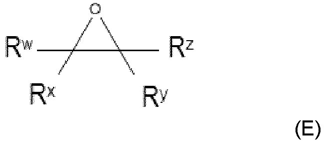 wherein: R^{w}, R^{x}, R^{y} and R^{z} may be the same or different and are independently selected from hydrogen, halogen, C₁-C₈ alkyl, C₃-C₁₀ cycloalkyl, C₂-C₁₂ alkenyl, C₆-C₁₈ aryl or C₇-C₁₈ aralkyl, with the proviso that at least one of R^{y} and R^{z} is not hydrogen.

It is preferred that R^{w}, R^{x} and R^{y} are hydrogen and R^{z} is either phenyl or C₁-C₈ alkyl and, more preferably, C₁-C₄ alkyl.

Having regard to this embodiment, exemplary monoepoxides include: ethylene oxide; 1,2-propylene oxide (*propylene oxide*); 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

In the present disclosure, reference is made to using at least one monoepoxide compound selected from the group consisting of: ethylene oxide; propylene oxide; cyclohexene oxide; (+)-cis-limonene oxide; (+)-cis,trans-limonene oxide; (-)-cis,trans-limonene oxide; cyclooctene oxide; and, cyclododecene oxide.

Again, without intention to limit the present disclosure, suitable polyepoxide compounds may be liquid, solid or in solution in solvent. Further, such polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be polymerized in present disclosure, mention may be made of: glycidyl ethers of polyhydric alcohols and polyhydric phenols; glycidyl esters of polycarboxylic acids; and, epoxidized polyethylenically unsaturated hydrocarbons, esters, ethers and amides.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

And examples of highly preferred polyepoxide compounds include: bisphenol-A epoxy resins, such as DER^{™} 331, DER^{™} 330, DER^{™} 337 and DER^{™} 383; bisphenol-F epoxy resins, such as DER^{™} 354; bisphenol-A/F epoxy resin blends, such as DER^{™} 353; aliphatic glycidyl ethers, such as DER^{™} 736; polypropylene glycol diglycidyl ethers, such as DER^{™} 732; solid bisphenol-A epoxy resins, such as DER^{™} 661 and DER^{™} 664 UE; solutions of bisphenol-A solid epoxy resins, such as DER^{™} 671-X75; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; and, sorbitol glycidyl ether, such as ERISYS^{™} GE-60.

The above aside, the epoxide-based compositions - irrespective of whether they are one (1K) or two (2K) part compositions - can in certain embodiments comprise glycidoxy alkyl alkoxy silanes having the formula: 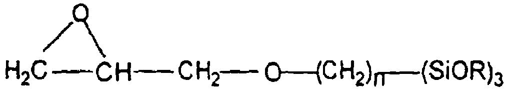 wherein:
each R is independently methyl or ethyl; and,
n is from 1-10.

Exemplary silanes include but are not limited to: γ-glycidoxy propyl trimethoxy silane, γ-glycidoxy ethyl trimethoxy silane, γ-glycidoxy methyl trimethoxy silane, γ-glycidoxy methyl triethoxy silane, γ-glycidoxy ethyl triethoxy silane, γ-glycidoxy propyl triethoxy silane; and, 8-glycidooxyoctyl trimethoxysilane. When present, the epoxide functional silanes should constitute less than less than 20 wt.%, preferably less than 10 wt.% or less than 5 wt.%, based on the total weight of the epoxide compounds.

The present disclosure also does not preclude the epoxide-based curable compositions from further comprising one or more cyclic monomers selected from the group consisting of: oxetanes; cyclic carbonates; cyclic anhydrides; and, lactones. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and, EP-A-0 119 840. However, such cyclic co-monomers should constitute less than 20 wt.%, preferably less than 10 wt.% or less than 5 wt.%, based on the total weight of the epoxide compounds.

### Curing Agent for Said Epoxide Compounds

The curing agent for the epoxide based compositions consists of one or more compounds which have at least one epoxide reactive group. Equally, the curing agent may comprise or consist of latent curatives, including photo-latent curatives. Combinations of reactive and latent curatives are envisaged within the context of the present invention. That aside, the amount of curing agent present in the composition should broadly be sufficient to effect the complete cure of the epoxide compound(s).

Reactive curing agents may, in particular, include one or more of: i) at least one polyamine having at least two amine hydrogens reactive toward epoxide groups; ii) at least one mercapto compound having at least two mercapto groups reactive toward epoxide groups; and, iii) at least one Mannich base.

The at least one polyamine having at least two amine hydrogens reactive toward epoxide groups should, in particular, contain primary and / or secondary amine groups and have an equivalent weight per primary or secondary amine group of not more than 150 g/eq., more preferably not more than 125 g/eq.

Suitable polyamines, which may be used alone or in combination, include but are not limited to the following:
i) Aliphatic, cycloaliphatic or arylaliphatic primary diamines of which the following examples may be mentioned: 2,2-dimethyl-1,3-propanediamine; 1,3-pentanediamine (DAMP); 1,5-pentanediamine; 1,5-diamino-2-methylpentane (MPMD); 2-butyl-2-ethyl-1,5-pentanediamine (C11-neodiamine); 1,6-hexanediamine (hexamethylenediamine, HMDA); 2,5-dimethyl-1,6-hexanediamine; 2,2,4- and / or 2,4,4-trimethylhexamethylenediamine; 1,7-heptanediamine; 1,8-octanediamine; 1,9-nonanediamine; 1,10-decanediamine; 1,11-undecanediamine; 1,12-dodecanediamine; 1,2-, 1,3- and 1,4-diaminocyclohexane; bis(4-aminocyclohexyl)methane; bis(4-amino-3-methylcyclohexyl)methane; bis(4-amino-3-ethylcyclohexyl)methane; bis(4-amino-3,5-dimethylcyclohexyl)methane; bis(4-amino-3-ethyl-5-methylcyclohexyl)methane; 1-amino-3-aminomethyl-3,5,5-trimethylcyclohexane (isophorone diamine, IPDA); 2- and / or 4-methyl-1,3-diaminocyclohexane; 1,3-bis(aminomethyl)-cyclohexane; 1,4-bis(aminomethyl)cyclohexane; 2,5(2,6)-bis(aminomethyl)-bicyclo[2.2.1]heptane (norborane diamine, NBDA); 3(4),8(9)-bis(aminomethyl)tricyclo[5.2.1.0^{2,6}]-decane (TCD-diamine); 1,4-diamino-2,2,6-trimethylcyclohexane (TMCDA); 1,8-menthanediamine; 3,9-bis(3-aminopropyl)-2,4,8,10-tetraoxaspiro[5.5]undecane; and, 1,3-bis(aminomethyl)benzene (MXDA).
ii) Tertiary amine group-containing polyamines with two or three primary aliphatic amine groups of which the following specific examples may be mentioned: N,N'-bis(aminopropyl)-piperazine; N,N-bis(3-aminopropyl)methylamine; N,N-bis(3-aminopropyl)ethylamine; N,N-bis(3-aminopropyl)propylamine; N,N-bis(3-aminopropyl)cyclohexylamine; N,N-bis(3-aminopropyl)-2-ethyl-hexylamine; tris(2-aminoethyl)amine; tris(2-aminopropyl)amine; tris(3-aminopropyl)amine; and, the products from the double cyanoethylation and subsequent reduction of fatty amines derived from natural fatty acids, such as N,N-bis(3-aminopropyl)dodecylamine and N,N-bis(3-aminopropyl)tallow alkylamine, commercially available as Triameen^{®} Y12D and Triameen^{®} YT (from Akzo Nobel).
iii) Ether group-containing aliphatic primary polyamines of which the following specific examples may be mentioned: bis(2-aminoethyl)ether; 3,6-dioxaoctane-1,8-diamine; 4,7-dioxadecane-1,10-diamine; 4,7-dioxadecane-2,9-diamine; 4,9-dioxadodecane-1,12-diamine; 5,8-dioxadodecane-3,10-diamine; 4,7,10-trioxatridecane-1,13-diamine and higher oligomers of these diamines; bis(3-aminopropyl)polytetrahydrofuranes and other polytetrahydrofuran diamines; cycloaliphatic ether group-containing diamines obtained from the propoxylation and subsequent amination of 1,4-dimethylolcyclohexane, such as that material commercially available as Jeffamine^{®} RFD-270 (from Huntsman); polyoxyalkylenedi- or-triamines obtainable as products from the amination of polyoxyalkylenedi- and -triols and which are commercially available under the name of Jeffamine@ (from Huntsman), under the name of polyetheramine (from BASF) or under the name of PC Amines^{®} (from Nitroil). A particular preference may be noted for the use of Jeffamine^{®} D-230, Jeffamine^{®} D-400, Jeffamine^{®} D-600, Jeffamine^{®} D-2000, Jeffamine^{®} D-4000, Jeffamine^{®} T-403, Jeffamine^{®} T-3000, Jeffamine^{®} T-5000, Jeffamine^{®}EDR-104, Jeffamine^{®} EDR-148 and Jeffamine^{®} EDR-176, as well as corresponding amines from BASF or Nitroil.
iv) Primary diamines with secondary amine groups of which the following examples may be mentioned: 3-(2-aminoethyl)aminopropylamine, bis(hexamethylene)triamine (BHMT); diethylenetriamine (DETA); triethylenetetramine (TETA); tetraethylenepentamine (TEPA); pentaethylenehexamine (PEHA); higher homologs of linear polyethyleneamines, such as polyethylene polyamines with 5 to 7 ethyleneamine units (so-called "higher ethylenepolyamine," HEPA); products from the multiple cyanoethylation or cyanobutylation and subsequent hydrogenation of primary di- and polyamines with at least two primary amine groups, such as dipropylenetriamine (DPTA), N-(2-aminoethyl)-1,3-propanediamine (N3-amine), N,N'-bis(3-aminopropyl)ethylenediamine (N4-amine), N,N'-bis(3-aminopropyl)-1,4-diaminobutane, N5-(3-aminopropyl)-2-methyl-1,5-pentanediamine, N3-(3-aminopentyl)-1,3-pentanediamine, N5-(3-amino-1-ethylpropyl)-2-methyl-1,5-pentanediamine or N,N'-bis(3-amino-1-ethylpropyl)-2-methyl-1,5-pentanediamine.
v) Polyamines with one primary and at least one secondary amino group of which the following examples may be mentioned: N-butyl-1,2-ethanediamine; N-hexyl-1,2-ethanediamine; N-(2-ethylhexyl)-1,2-ethanediamine; N-cyclohexyl-1,2-ethanediamine; 4-aminomethyl-piperidine; N-(2-aminoethyl)piperazine; N-methyl-1,3-propanediamine; N-butyl-1,3-propanediamine; N-(2-ethylhexyl)-1,3-propanediamine; N-cyclohexyl-1,3-propanediamine; 3-methylamino-1-pentylamine; 3-ethylamino-1-pentylamine; 3-cyclohexylamino-1-pentylamine; fatty diamines such as N-cocoalkyl-1,3-propanediamine; products from the Michael-type addition reaction of primary aliphatic diamines with acrylonitrile, maleic or fumaric acid diesters, citraconic acid diesters, acrylic and methacrylic acid esters, acrylic and methacrylic acid amides and itaconic acid diesters, reacted in a 1:1 molar ratio; products from the partial reductive alkylation of primary polyamines with aldehydes or ketones, especially N-monoalkylation products of the previously mentioned polyamines with two primary amine groups and in particular of 1,6-hexanediamine, 1,5-diamino-2-methylpentane, 1,3-bis(aminomethyl)cyclohexane, 1,4-bis(aminomethyl)cyclohexane, 1,3-bis(aminomethyl)benzene, BHMT, DETA, TETA, TEPA, DPTA, N3-amine and N4-amine, wherein preferred alkyl groups are benzyl, isobutyl, hexyl and 2-ethylhexyl; and, partially styrenated polyamines such as those commercially available as Gaskamine^{®} 240 (from Mitsubishi Gas Chemical).
vi) Secondary diamines and, in particular, N,N'-dialkylation products of the previously mentioned polyamines with two primary amine groups, especially N,N'-dialkylation products of 1,6-hexanediamine, 1,5-diamino-2-methylpentane, 1,3-bis(aminomethyl)cyclohexane, 1,4-bis(aminomethyl)-cyclohexane, 1,3-bis(aminomethyl)benzene, BHMT, DETA, TETA, TEPA, DPTA, N3-amine or N4-amine, wherein preferred alkyl groups are 2-phenylethyl, benzyl, isobutyl, hexyl and 2-ethylhexyl.
vii) Aromatic polyamines of which mention may be made of: m- and p-phenylenediamine; 4,4'-, 2,4' and 2,2'-diaminodiphenylmethane; 3,3'-dichloro-4,4'-diaminodiphenylmethane (MOCA); 2,4- and 2,6-tolylenediamine; mixtures of 3,5-dimethylthio-2,4- and -2,6-tolylenediamine (available as Ethacure^{®} 300 from Albermarle); mixtures of 3,5-diethyl-2,4- and -2,6-tolylene diamine (DETDA); 3,3',5,5'-tetraethyl-4,4'-diaminodiphenylmethane (M-DEA); 3,3',5,5'-tetraethyl-2,2'-dichloro-4,4'-diaminodiphenylmethane (M-CDEA); 3,3'-diisopropyl-5,5'-dimethyl-4,4'-diaminodiphenylmethane (M-MIPA); 3,3',5,5'-tetraisopropyl-4,4'-diaminodiphenylmethane (M-DIPA); 4,4'-diamino diphenyl-sulfone (DDS); 4-amino-N-(4-aminophenyl)benzenesulfonamide; 5,5'-methylenedianthranilic acid; dimethyl-(5,5'-methylenedianthranilate); 1,3-propylene-bis(4-aminobenzoate); 1,4-butylene-bis(4-aminobenzoate); polytetramethylene oxide-bis(4-aminobenzoate) (available as Versalink^{®} from Air Products); 1,2-bis(2-aminophenylthio)ethane, 2-methylpropyl-(4-chloro-3,5-diaminobenzoate); and, tert.butyl-(4-chloro-3,5-diaminobenzoate).
viii)Polyamidoamines of which indicative members include the reaction products of monohydric or polyhydric carboxylic acids or the esters or anhydrides thereof, - in particular dimer fatty acids - and an aliphatic, cycloaliphatic or aromatic polyamine, for instance polyalkyleneamines such as DETA or TETA. Commercially available polyamidoamines include: Versamid^{®} 100, 125, 140 and 150 (from Cognis); Aradur^{®} 223, 250 and 848 (from Huntsman); Euretek^{®} 3607 and 530 (from Huntsman); and, Beckopox^{®} EH 651, EH 654, EH 655, EH 661 and EH 663 (from Cytec).

Exemplary compounds among the aforementioned polyamines having at least two primary aliphatic amine groups are: isophorone diamine (IPDA); hexamethylene diamine (HMDA); 1,3-bis(amino-methyl)cyclohexane; 1,4-bis(aminomethyl)cyclohexane; bis(4-amino-cyclohexyl)methane; bis(4-amino-3-methylcyclohexyl)methane; NBDA; and, ether group-containing polyamines with a number average molecular weight (Mn) of up to 500 g/mol of which commercial examples include Jeffamine@ D-230 and D-600 (available from Huntsman).

As noted above, the epoxide-based composition of the present disclosure may optionally comprise - as the curing agent - at least one compound which has at least two reactive mercapto-groups per molecule. Suitable mercapto-group containing compounds, which may be used alone or in combination, include but are not limited to the following:
- Mercaptan-terminated polyoxyalkylene ethers, obtainable by reacting polyoxyalkylenedi- and -triols either with epichlorohydrin or with an alkylene oxide, followed by sodium hydrogen sulfide.
- Mercaptan-terminated compounds in the form of polyoxyalkylene derivatives, known under the trade name of Capcure^{®} (from Cognis), in particular the types WR-8, LOF and 3-800 thereof.
- Polyesters of thiocarboxylic acids of which particular examples include: pentaerythritol tetramercapto-acetate (PETMP); trimethylolpropane trimercaptoacetate (TMPMP); glycol dimercaptoacetate; and, the esterification products of polyoxyalkylene diols and triols, ethoxylated trimethylolpropane and polyester diols with thiocarboxylic acids such as thioglycolic acid and 2- or 3-mercaptopropionic acid.
- 2,4,6-trimercapto-1,3,5-triazine, 2,2'-(ethylenedioxy)-diethanethiol (triethylene glycol dimercaptan) and / or ethanedithiol.
- Tris(2-(mercaptopropionyloxy)ethyl)isocyanate.

A preference is acknowledged for the use of polyesters of thiocarboxylic acids and, in particular, for the use of at least one of pentaerythritol tetramercapto-acetate (PETMP), tris-(3-mercaptopropionate) (TMP), trimethylolpropane trimercaptoacetate (TMPMP), tris(2-(mercaptopropionyloxy)ethyl)isocyanate and glycol dimercaptoacetate.

As noted above, a reactive curative may comprise at least one Mannich base. Such compounds may be characterized by containing at least one phenalkamine and, in particular, a phenalkamine obtained from the condensation of cardanol (CAS Number: 37330-39-5), an aldehyde and an amine. The reactant amine in the condensation reaction is desirably ethylenediamine or diethyltriamine.

Mannich bases and phenalkamines are known in the art and suitable examples include the commercially available phenalkamines Cardolite^{®} NC-541, NC-557, NC-558, NC-566, Lite 2001 and Lite 2002 (available from Cardolite), Aradur^{®} 3440, 3441, 3442 and 3460 (available from Huntsman) and Beckopox^{®} EH 614, EH 621, EH 624, EH 628 and EH 629 (available from Cytec).

Any common latent epoxy curing agents used in the art can be used in the present disclosure without special limitations. For example, suitable latent epoxy curing agents which may be used herein are described in: US Patent No. 4,546,155; US Patent No. 7,226,976; US Patent No. 4,833,226; JP2008214567; UK Patent No. GB 1,121,196; WO2014/165423; and, US Patent No. 5,077,376.

Further, examples of commercially available latent epoxy curing agents include Ajicure PN-23, PN-40, PN-H, MY-24 and PN-50 commercially available from Ajinomoto Co., Inc.; EH-4337S, EH-3293S and EH-4357S commercially available from Asahi Denka Co. Ltd.; Novacure HX-3722 and HXA-3921 HP commercially available from Asahi Kasei Kogyo. K.K.; and, Sunmide LH-210, Ancamin 2014AS/FG and Ancamin 2337S commercially available from Air Products and Chemicals, Inc.

As is known in the art, dicyandiamide finds common utility as a latent epoxy curing agent and may indeed be used in the present compositions. When employed, it is preferred that said dicyandiamide is in finely divided form: an average particle size (d50) of from 0.5 to 100 µm, for example from 1 to 50 µm or from 2 to 20 µm might be noted as desirable. Said particle size refers to the diameter or largest dimension of a particle in a distribution of particles and is measureable via dynamic light scattering.

Further exemplary latent epoxy curing agents include but are not limited: ketimines obtainable by the reaction of aliphatic polyamines and ketones; polyethyleneimines, in particular polyethyleneimines having a weight average molecular weight (Mw) from 700 to 1,000,000 g/mol.; imidazole derivatives such as 2-heptadeoylimidazole, 2-phenyl-4,5-dihydroxymethylimidazole, 2-phenyl-4-methyl-5-hydroxymethylimidazole, 2-phenyl-4-benzyl-5-hydroxymethyl-imidazole; 2,4-diamino-8-2-methylimidazolyl-(1)-ethyl-5-triazine; addition products of triazine with isocyanuric acid; hydrazides such as succinohydrazide, adipohydrazide, isophtholohydrazide o-oxybenzohydrazide and salicylohydrazide.

### Optional Accelerators

The epoxide-based compositions may, in certain embodiments, comprise accelerators: these are substances that promote the reaction between the epoxide groups and the epoxide-reactive groups, for instance the reaction between the amine or thiol groups and the epoxide groups. A specific example relates to the use of an amine accelerator which functions by de-protonation of reactive thiol (-SH) groups present to thiolate (-S"), which thiolate reacts with epoxy group by nucleophilic ring opening polymerization.

Without intention to the limit the accelerators having utility herein, mention may be made of the following suitable accelerators: i) acids or compounds hydrolyzable to acids, in particular a) organic carboxylic acids, such as acetic acid, benzoic acid, salicylic acid, 2-nitrobenzoic acid and lactic acid; b) organic sulfonic acids, such as methanesulfonic acid, p-toluenesulfonic acid and 4-dodecylbenzenesulfonic acid; c) sulfonic acid esters; d) inorganic acids, such as phosphoric acid; e) Lewis acid compounds, such as BF₃ amine complexes, SbF₆ sulfonium compounds, bis-arene iron complexes; f) Bronsted acid compounds, such as pentafluoroantimonic acid complexes; and, e) mixtures of the aforementioned acids and acid esters; ii) tertiary amines, such as 2piperazin-1-ylethanamine, 1,4-diazabicyclo[2.2.2]octane, benzyldimethylamine, α-methylbenzyl dimethylamine, triethanolamine, dimethylamino propylamine, imidazoles - including N-methylimidazole, N-vinylimidazole and 1,2-dimethylimidazole - and salts of such tertiary amines; iii) quaternary ammonium salts, such as benzyltrimethyl ammonium chloride; iv) amidines, such as 1,8-diazabicyclo[5.4.0]undec-7-ene; v) guanidines, such as 1,1,3,3-tetramethylguanidine; vi) phenols, in particular bisphenols; vii) phenol resins; and, viii) phosphites, such as di- and triphenylphosphites.

In an embodiment, the accelerator for curing a composition based on epoxy resins may be a photobase generator: upon exposure to UV radiation - typically in the wavelength from 320 to 420 nm - said photobase generator releases an amine, which catalyzes the addition of the epoxide reactive groups to the epoxide. The photobase generator is not specifically limited so long as it generates an amine directly or indirectly with light irradiation. The preparation of suitable photobase generator compounds is known in the art and an instructive reference includes U.S. Patent No. 5,650,261 (Winkel). That aside, suitable photobase generators which may be mentioned include: benzyl carbamates; benzoin carbamates; o-carbamoylhydroxyamines; O-carbamoyloximes; aromatic sulfonamides; alpha-lactams; N- (2-allylethenyl)amides; arylazide compounds, N-arylformamides, and 4-(ortho-nitrophenyl)dihydropyridines.

In an alternative embodiment, an acid accelerator may be a photoacid generator (PAG): upon irradiation with light energy, ionic photoacid generators undergo a fragmentation reaction and release one or more molecules of Lewis or Bronsted acid that catalyze the ring opening and addition of the pendent epoxide groups to form a crosslink. Useful photoacid generators are thermally stable, do not undergo thermally induced reactions with the forming copolymer and are readily dissolved or dispersed in the curable compositions.

Exemplary cations which may be used as the cationic portion of the ionic PAG of the invention include organic onium cations such as those described in US Patent No. 4,250,311, US Patent No. 3,113,708, US Patent No. 4,069,055, US Patent No. 4,216,288, US Patent No. 5,084,586, US Patent No. 5,124,417, and, US Patent No. 5,554,664. The references specifically encompass aliphatic or aromatic Group IVA and VIIA (CAS version) centered onium salts, with a preference being noted for I-, S-, P-, Se- N- and C-centered onium salts, such as those selected from sulfoxonium, iodonium, sulfonium, selenonium, pyridinium, carbonium or phosphonium.

As is known in the art, the nature of the counter-anion in the ionic photoacid generator (PAG) can influence the rate and extent of cationic addition polymerization of the epoxide groups with, for illustration, the order of reactivity among commonly used nucleophilic anions being SbF₆ > AsF₆ > PF₆ > BF₄. The influence of the anion on reactivity has been ascribed to three principle factors which the skilled artisan should compensate for in the present invention: (1) the acidity of the protonic or Lewis acid generated; (2) the degree of ion-pair separation in the propagating cationic chain; and, (3) the susceptibility of the anions to fluoride abstraction and consequent chain termination.

*In toto* photoinitiator should be present in the photo-curable composition in amount of from 0 to 5 wt.%, for example from 0 to 2.0 wt.% or from 0 to 1.5 wt.%, based on the total weight of the composition.

As would be recognized by the skilled artisan, photosensitizers can be incorporated into the compositions to improve the efficiency with which the photoinitiator uses the energy delivered. The term *"photosensitizer"* is used in accordance with its standard meaning to represent any substance that either increases the rate of photoinitiated polymerization or shifts the wavelength at which polymerization occurs. When present, photosensitizers should be used in an amount of from 5 to 25 wt.%, based on the weight of the photoinitiator.

The use of photoinitiator(s) - and where applicable photosensitizer(s) - may produce residue compounds from the photochemical reaction in the final cured product. The residues may be detected by conventional analytical techniques such as: infrared, ultraviolet and NMR spectroscopy; gas or liquid chromatography; and, mass spectroscopy. Thus, the present invention may comprise cured matrix (co-)polymers and detectable amounts of residues from at least the photoinitiator. Such residues are present in small amounts and do not normally interfere with the desired physiochemical properties of the final cured product.

Without intention to limit the present disclosure, a mixture comprising one or more photoinitiators may be irradiated with activating radiation to polymerize monomeric component(s) contained therein. The purpose of the irradiation is to generate the active species from the photoinitiator which initiates the cure reactions. Once that species is generated, the cure chemistry is subject to the same rules of thermodynamics as any chemical reaction: the reaction rate may be accelerated by heat.

The skilled artisan will recognize that the selection of an accelerator is not simply concerned with adding the fastest accelerator. Other factors determinative in the selection of accelerators include: cost; toxicity; solubility; processing effects, such as working time, premature gelation, exothermic degradation, expansion and off-gassing; final properties, such as glass transition temperature (T_{g}), modulus, strength, elongation at break and chemical resistance; regulatory concerns; and, ease of use.

It is preferred in the present invention to employ an accelerator comprising or consisting of at least one tertiary amine, at least one amidine or mixtures thereof. More particularly, accelerator should be selected from the group consisting of imidazole, methylimidazole, benzyldimethylamine, 1,8-diazabicyclo[5.4.0]undec-7-ene, 1,4-diazabicyclo(2,2,2)octane and mixtures thereof.

### Illustrative Embodiment of a Two-Part (2K) Composition based on Epoxy Resins

In a first exemplary embodiment of a liquid, state curable composition from which the cured adhesive (10) may be obtained, there is provided a two-part (2K) composition comprising: a first part comprising, based on the weight of the composition, from 2 to 25 wt.%, preferably 5 to 20 wt.% of non-polymerizable electrolyte, wherein said electrolyte comprises at least one non-polymerizable salt selected from the group consisting of: ammonium salts; pyridinium salts; phosphonium salts; imidazolium salts; oxazolium salts; guadinium salts; and, thiazolium salts; from 0 to 15 wt.%, preferably from 1.5 to 10 wt.%, of solubilizer, wherein said solubilizer comprises a polyoxy(C₂-C₃)alkylene glycol having a weight average molecular weight of from 200 to 10000 g/mol, for example 200 to 2000 g/mol; and, from 20 to 70 wt.%, preferably 20 to 60 wt.% of at least one epoxide compound; a second part comprising: a curing agent consisting of at least one compound possessing at least two epoxide reactive groups per molecule, wherein said curing agent comprises at least one polyamine having at least two amine hydrogens reactive toward epoxide groups, said polyamine being further characterized by containing primary and / or secondary amine groups and having an equivalent weight per primary or secondary amine group of not more than 150 g/eq; and, from 0 to 15 wt.%, preferably 0.1 to 10 wt.% of accelerator, wherein said accelerator is selected from the group consisting of tertiary amines, quaternary ammonium salts, amidines, guanidines and mixtures thereof, wherein said composition is further characterized by comprising from 1 to 50 wt.%, preferably from 2 to 25%, of rheology control agent; and, by a molar ratio of epoxide-reactive groups to epoxide groups of from 0.75: 1 to 1.1: 1.

### 1.2.3.2 Acrylic Based Matrix Resin Systems

The polymer resin (A^{R}) of the curable composition may be based on ethylenically unsaturated compounds. In particular, in accordance with an important embodiment of the disclosure, there is provided a curable two-part (2K) composition comprising: a first part (A) comprising: a non-polymerizable electrolyte; (meth)acrylate monomer; co-polymerizable acid; and, a second part (B) comprising: a first curing agent for the monomers of said first part; a second curing agent for the monomers of said first part; wherein said two-part (2K) composition further comprises a rheology control agent. For completeness, the rheology control agent may be disposed in one or both parts of the composition.

As an exemplary embodiment of such an acrylic-based composition, there is provided a curable two-part (2K) composition comprising: a first part (A) comprising, based on the weight of said first part: from 0.5 to 20 wt.%, preferably from 5 to 15 wt.%, of said electrolyte; from 20 to 80 wt.%, preferably from 30 to 60 wt.%, of said (meth)acrylate monomer; and, from 0.5 to 20 wt.%, preferably from 5 to 15 wt.%, of said co-polymerizable acid; and, a second part (B) comprising, based on the weight of said second part: from 5 to 40 wt.%, preferably from 10 to 40 wt.% of said first curing agent; from 0.01 to 2 wt.%, preferably from 0.01 to 1 wt.% of said second curing agent; from 5 to 30 wt.%, preferably from 5 to 20 wt.% of wax; and, from 20 to 60 wt.%, preferably from 30 to 60 wt.% of solubilizer, wherein said composition further comprises, based on the total weight of the composition: from 1 to 20 wt.% of said rheology control agent; and, from 0.1 to 5 wt.%, preferably from 0.1 to 2 wt.% of said oxygen scavenger.

The first (A) and second (B) parts are conventionally combined at a ratio by weight of A:B of from 20:1 to 1:1, for example 15:1 to 5:1 or from 12:1 to 8:1. A particularly preferred embodiment of the composition has a ratio by weight of Part A: Part B of 10:1.

### (Meth)acrylate Monomer

There is no particular intention to limit (meth)acrylate esters having utility herein and it is considered that the (meth)acrylate monomers may be any ester of acrylic acid or methacrylic acid known to the art.

That said, exemplary (meth)acrylic monomers include but are not limited to:
- C₁-C₁₈ alkyl esters of (meth)acrylic acid, such as methyl (meth)acrylate, ethyl (meth)acrylate, n-propyl (meth)acrylate, isopropyl (meth)acrylate, butyl (meth)acrylate (all isomers), hexyl (meth)acrylate, n-heptyl(meth)acrylate, n-octyl(meth)acrylate, 2-ethylhexyl (meth)acrylate, n-nonyl(meth)acrylate, n-decyl(meth)acrylate, n-dodecyl(meth)acrylate and n-stearyl(meth)acrylate;
- C₃-C₁₈ cycloalkyl esters of (meth)acrylic acid, such as cyclohexyl(meth)acrylate and isobornyl(meth)acrylate;
- C₆-C₁₈ aryl esters of (meth)acrylic acid, such as phenyl(meth)acrylate and tolyl(meth)acrylate;
- C₇-C₂₄ aralkyl esters of (meth)acrylic acid, such as benzyl(meth)acrylate;
- C₁-C₁₈ alkoxyalkyl esters of (meth)acrylic acid, such as 2-methoxyethyl(meth)acrylate, 2-ethoxyethyl(meth)acrylate and 3-methoxybutyl(meth)acrylate;
- fluorine-containing C₁-C₁₈ alkyl esters of (meth)acrylic acid, such as trifluoromethylmethyl(meth)acrylate, 2-trifluoromethylethyl(meth)acrylate, 2-perfluoroethylethyl(meth)acrylate, 2-perfluoroethyl-2-perfluorobutylethyl(meth)acrylate, 2-perfluoroethyl(meth)acrylate, perfluoromethyl(meth)acrylate, diperfluoromethylmethyl(meth)acrylate, 2-perfluoromethyl-2-perfluoroethylmethyl(meth)acrylate, 2-perfluorohexylethyl(meth)acrylate, 2-perfluorodecylethyl(meth)acrylate and 2-perfluorohexadecylethyl(meth)acrylate;
- C₁-C₁₈ hydroxyalkyl esters of (meth)acrylic acid, such as 2-hydroxyethyl(meth)acrylate, 2-hydroxypropyl(meth)acrylate and pentaerythritol tri(meth)acrylate;
- di/poly-esters of di/poly-functional alcohols, such as ethylene glycol di(meth)acrylate, 1,3 or 1,4-butanediol di(meth)acrylate, 1,6-hexanediol di(meth)acrylate and trimethylolpropane tri(meth)acrylate;
- C₁-C₁₈ aminoalkyl esters of (meth)acrylic acid, such as 2-aminoethyl(meth)acrylate, dimethylaminoethyl (meth)acrylate and (meth)acryloxyethoxyethylamine;
- C₁-C₁₈ alkoxysilyl-containing alkyl esters of (meth)acrylic acid, such as γ-(methacryloyloxypropyl)trimethoxysilane;
- ethylene oxide or propylene oxide adducts of (meth)acrylic acid; and,
- (meth)acrylate esters formed by alcohols bearing other functional groups, such as tetrahydrofurfuryl (meth)acrylate.

For completeness, it is not precluded that the first part of the composition comprises a macromonomer component consisting of one or more oligomers selected from the group consisting of urethane (meth)acrylates, polyester (meth)acrylates and polyether (meth)acrylates. However, such oligomeric compounds - which may be mono- or polyfunctional with respect to the polymerizable (meth)acrylate functionality but which are based on repeated structural urethane, ester and ether subunits - should not usually constitute more than 30 wt.% of the total of (meth)acrylate monomers in said first part.

As is known in the art, urethane (meth) acrylate oligomers may be prepared by reaction of a polyfunctional (meth)acrylate bearing a hydroxyl group with a polyisocyanate as defined herein above. In particular, the polyfunctional (meth)acrylate bearing a hydroxyl group may be selected from the group consisting of: 2-hydroxyethyl (meth)acrylate; 2-hydroxyisopropyl (meth)acrylate; 4-hydroxybutyl (meth)acrylate; hydroxyethylcaprolactone (meth)acrylate; pentaerythritol tri(meth)acrylate; pentaerythritol tetra(meth)acrylate; dipentaerythritol penta(meth)acrylate; dipentaerythritol hexa(meth)acrylate; and, combinations thereof.

Suitable polyester (meth)acrylate oligomers are obtained by reacting (meth)acrylic acid with a polyester prepared from a polybasic acid or an anhydride thereof and a polyhydric alcohol. Examples of the polybasic acid include but are not limited to: phthalic acid; succinic acid; adipic acid; glutaric acid; sebacic acid; isosebacic acid; tetrahydrophthalic acid; hexahydrophthalic acid; dimer acid; trimellitic acid; pyromellitic acid; pimelic acid; and, azelaic acid. Examples of the polyhydric alcohol include but are not limited to: 1,6-hexanediol; diethylene glycol; 1,2-propylene glycol; 1,3-butylene glycol; neopentyl glycol; dipropylene glycol; polyethylene glycol; and, polypropylene glycol.

As is known in the art, polyether (meth)acrylate oligomers may be obtained by an ester exchange reaction between a polyether and a (meth)acrylate ester, such as ethyl methacrylate. Exemplary polyethers include polyethers obtained from ethoxylated or propoxylated trimethylolpropane, pentaerythritol or the like, or by polyetherification of 1 ,4-propanediol or the like.

In preferred embodiments, the first part comprises at least one (meth)acrylate monomer selected from the group consisting of: methyl (meth)acrylate; ethyl (meth)acrylate; n-propyl (meth)acrylate; isopropyl (meth)acrylate; n-butyl(meth)acrylate; isobutyl (meth)acrylate; tert-butyl (meth)acrylate; n-pentyl (meth)acrylate; n-hexyl (meth)acrylate; cyclohexyl (meth)acrylate; n-heptyl (meth)acrylate; n-octyl(meth)acrylate; 2-ethylhexyl-(meth)acrylate; nonyl (meth) acrylate; decyl (meth)acrylate; dodecyl (meth)acrylate; phenyl (meth)acrylate; tolyl (meth)acrylate; benzyl (meth)acrylate; 2-methoxyethyl (meth)acrylate; 3-methoxybutyl (meth)acrylate; 2-hydroxyethyl (meth)acrylate; 2-hydroxypropyl(meth)acrylate; stearyl(meth)acrylate; glycidyl (meth)acrylate; isobornyl (meth)acrylate; 2-aminoethyl (meth)acrylate; y-(meth)acryloyloxypropyl trimethoxysilane; (meth)acrylic acid-ethylene oxide adduct; trifluoromethylmethyl (meth)acrylate; 2-trifluoromethylethyl (meth)acrylate; 2-perfluoro ethylethyl (meth)acrylate; 2-perfluoroethyl-2-perfluorobutylethyl (meth)acrylate; 2-perfluoroethyl (meth)acrylate; perfluoromethyl (meth)acrylate; diperfluoromethylmethyl (meth)acrylate; 2-perfluoromethyl-2-perfluoroethylmethyl (meth)acrylate; 2-perfluorohexylethyl (meth)acrylate; 2-perfluorodecylethyl (meth)acrylate; 2-perfluorohexadecylethyl (meth)acrylate; ethoxylated trimethylolpropane triacrylate; trimethylol propane trimethacrylate; dipentaerythritol monohydroxypentacrylate; pentaerythritol triacrylate; ethoxylated trimethylolpropane triacrylate; 1,6-hexanedioldiacrylate; neopentyl glycoldiacrylate; pentaerythritol tetraacrylate; 1,2-butylene glycoldiacrylate; trimethylopropane ethoxylate tri(meth)acrylate; glyceryl propoxylate tri(meth) acrylate; trimethylolpropane tri(meth)acrylate; dipentaerythritol monohydroxy penta(meth)acrylate; tripropyleneglycol di(meth)acrylate; neopentylglycol propoxylate di(meth)acrylate; 1,4-butanediol di(meth)acrylate; triethyleneglycol di(meth)acrylate; butylene glycol di(meth)acrylate; and, ethoxylated bisphenol A di(meth)acrylate.

Good results have been obtained where the first part comprises at least one (meth)acrylate monomer selected from the group consisting of methyl (meth)acrylate, ethyl (meth)acrylate, isobornyl (meth)acrylate, ethoxylated trimethylolpropanetriacrylate and trimethylolpropane triacrylate. The use of methyl methacrylate in the first part is particularly preferred.

The above listed (meth)acrylate monomers are preferred because it is believed that the size of the monomer leads to a formation of an ideal polymer network, which increases ion transport.

It is known in the art that incorporation of certain additional, non-polymerizing functionalities into (meth)acrylate monomers can improve the surface adhesion of polymers derived therefrom. Mention in this regard may be made of anhydride, phosphate or phosphonate functionalities and (meth)acrylate monomers bearing such functionalities may be used in the first part of the present composition. A listing of such phosphorus compounds is found in US Patent No. 4,223,115. Exemplary monomers include: 2-monomethacryloxyethyl phosphate; bis(2-methacryloxyethyl) phosphate; 2-acryloyloxyethyl phosphate; bis-(2-acryloyloxyethyl) phosphate; methyl-(2-methacryloyloxyethyl) phosphate; ethyl methacryloyloxyethyl phosphate; methyl acryloyloxyethyl phosphate; ethyl acryloyloxyethyl phosphate; 2-hydroxyethylmethacrylate phosphate; 10-[(2-methylprop-2-enoyl)oxy]decyl dihydrogen phosphate (*10-methacryloyloxydecyl dihydrogen phosphate*); and, 4-methacryloxyethyl trimellitic anhydride.

### Co-Polymerizable Acid

As noted above, the first part of the composition comprises co-polymerizable acid. It is considered that the co-polymerizable acid will improve the cure speed and metal adhesion of the composition. For completeness, whilst such monomers should typically be used in the form of free acid, it is not precluded that the constituent acid groups of the monomers be partially or completely neutralized with suitable bases, provided this does not compromise their participation in co-polymerization.

Without intention to limit the present disclosure, co-polymerizable acid monomers should be selected from the group consisting of: ethylenically unsaturated carboxylic acids; ethylenically unsaturated sulfonic acids; vinylphosphonic acid; and, mixtures thereof. Suitable ethylenically unsaturated sulfonic acids are, for instance, vinylsulfonic acid, styrenesulfonic acid and acrylamidomethylpropanesulfonic acid.

Preferably the co-polymerizable acid of this part comprises or consists of ethylenically unsaturated carboxylic acids selected from the group consisting of: α,β-monoethylenically unsaturated monocarboxylic acids; α,β-monoethylenically unsaturated dicarboxylic acids; C₁-C₆ alkyl half-esters of α,β-monoethylenically unsaturated dicarboxylic acids; α,β-monoethylenically unsaturated tricarboxylic acids; and, C₁-C₆ alkyl esters of α,β-monoethylenically unsaturated tricarboxylic acids bearing at least one free carboxylic acid group; and, mixtures thereof. In particular, the co-polymerizable acid of this part comprises or consists of at least one acid selected from the group consisting of methacrylic acid, acrylic acid, itaconic acid, maleic acid, aconitic acid, crotonic acid and fumaric acid.

It is noted that the present disclosure does not preclude the presence in the first part of vinyl monomers which can be copolymerized with (meth)acrylate monomers and which are selected from the group consisting of: styrene monomers, such as styrene, vinyltoluene, α-methylstyrene and chlorostyrene; fluorine containing vinyl monomers, such as perfluoroethylene, perfluoropropylene and fluorinated vinylidene; silicon containing vinyl monomers such as vinyltrimethoxysilane and vinyltriethoxysilane; maleimide monomers, such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; nitrile group containing vinyl monomers, such as acrylonitrile and methacrylonitrile; amide group containing vinyl monomers, such as acrylamide and methacrylamide; vinyl esters such as vinyl acetate, vinyl propionate, vinyl pivalate, vinyl benzoate and vinyl cinnamate; alkenes such as ethylene and propylene; conjugated dienes such as butadiene and isoprene; and vinyl chloride, vinylidene chloride, allyl chloride and allylalcohol. However, when included, such vinyl co-monomers should constitute less than 40 wt.%, preferably less than 20 wt.% or less than 10 wt.%, based on the total weight of co-polymerizable acid monomers.

### First Curing Agent

The first curing agent comprises or consists of at least one free radical initiator which decomposes under the action of heat to provide free radicals. Exemplary heat-activated free-radical initiators include: peroxides, including ketone peroxides; hydroperoxides; peroxycarbonates; peracetic acids; azo compounds, such as 2,2'-azobisisobutyronitrile (AIBN) or 2,2'-azobis(2,4-dimethylpentanenitrile), 4,4'-azobis(4-cyanovaleric acid), or 1,1'-azobis (cyclohexanecarbonitrile); tetrazines; and, persulfate compounds, such as potassium persulfate. Free radical initiators that are solids at room temperature are preferred. Independently of or additional to that statement of preference, it is desirable that said free radical initiators have a half-life of at least 10 hours at a temperature of 60°C.

While certain peroxides - such as dialkyl and diaryl peroxides - have been disclosed as useful curing agents in *inter alia* US Patent No. 3,419,512 (Lees) and US Patent No. 3,479,246 (Stapleton) and indeed have utility herein, hydroperoxides also represent an important class of curing agent for the present invention. In this context, whilst hydrogen peroxide itself may be used, it is preferred to employ organic hydroperoxides. For completeness, included within the definition of hydroperoxides are materials such as organic peroxides or organic peresters which decompose or hydrolyze to form organic hydroperoxides *in situ*: examples of such peroxides and peresters are cyclohexyl and hydroxycyclohexyl peroxide and t-butyl perbenzoate, respectively.

Without intention to limit the present disclosure, representative hydroperoxide compounds have the general formula:

RPOOH

wherein: RP is a hydrocarbon group containing up to 18 carbon atoms, and preferably wherein: RP is C₁-C₁₂ alkyl, C₆-C₁₈ aryl or C₇-C₁₈ aralkyl.

As exemplary compounds, which may be used alone or in combination as the first curing agent, there may be mentioned: cumene hydroperoxide (CHP); para-menthane hydroperoxide; t-butyl hydroperoxide (TBH); t-butyl perbenzoate; t-butyl peracetate; t-amyl hydroperoxide; 1,2,3,4-tetramethylbutyl hydroperoxide; lauryl peroxide; benzoyl peroxide (also (known as dibenzoyl peroxide, C₁₄H₁₀O₄, CAS No. 94-36-0); 1,3-bis(t-butylperoxyisopropyl) benzene; diacetyl peroxide; butyl-4,4-bis(t-butylperoxy)valerate; p-chlorobenzoyl peroxide; t-butyl cumyl peroxide; di-t-butyl peroxide; dicumyl peroxide; 2,5-dimethyl-2,5-di-t-butylperoxyhexane; 2,5-dimethyl-2,5-di-t-butyl-peroxyhex-3-yne; and, 4-methyl-2,2-di-t- butylperoxypentane.

Preferably said first curing agent is a peroxide or hydroperoxide compound selected from the group consisting of tert-butyl peroxide, tert-butyl perbenzoate, cumene hydroperoxide, tert-butyl peroxybenzoate, diacetyl peroxide, benzoyl peroxide, tert-butyl peracetate, lauryl peroxide and mixtures thereof: a particular preference for benzoyl peroxide is noted.

Where the first curing agent is an oxidizing agent - such as the aforementioned peroxide and hydroperoxide compounds - the composition may further comprise an activator. When combined in an appropriate proportion, the oxidizing agent and the activator (*reducing agent*) yield polymerization initiating radicals, even under mild conditions without a supplementary energy source. Either the oxidizing agent alone or both of the oxidizing agent and the reducing agent may provide polymerization initiating radicals.

Exemplary activators or reducing agents may be selected from the group consisting of: alkali metal sulfites; alkali metal hydrogensulfites; alkali metal metabisulfites; formaldehyde sulfoxylates; alkali metal salts of aliphatic sulfinic acids; alkali metal hydrogensulfides; salts of polyvalent metals, in particular Co(ll) salts and Fe(ll) salts such iron(II) sulfate, iron(II) ammonium sulfate or iron(II) phosphate; dihydroxymaleic acid; benzoin; ascorbic acid; reducing amines, in particular aromatic tertiary amines such as N,N-bis(2-hydroxyethyl)-p-toluidine (*diethanol-para-toluidine,* DE-p-T), 2-(4-dimethylaminophenyl)ethyl alcohol (DMAPE), 4-tert butyl dimethyl aniline, 3-dimethylaminobenzoic acid, 4-dimethylaminobenzoic acid, ethyl 4-dimethylaminobenzoate (EDMAB), 2-ethylhexyl 4-dimethylaminobenzoate and 4-dimethylaminobenzoate; and, reducing saccharides, such as sorbose, glucose, fructose and/or dihydroxyacetone.

It would be conventional for the activator (*reducing agent*) to be included in the first part with the polymerizable species. It is however not precluded that the activator be added to the second part shortly prior to the contacting of the first and second parts.

### Second Curing Agent

As noted above, the second part of the composition comprises a second curing agent which should typically be employed in an amount of from 0.01 to 2 wt.%, based on the weight of said second part: the second curing agent may preferably constitute from 0.01 to 1 wt.%, for example from 0.01 to 0.5 wt.% of said second part.

In an important embodiment, the second curing agent comprises or consists of at least one compound which is a salt or a complex of a transition metal, which transition metal may be selected from the group consisting of Fe, Co, V, Ti, Mn, Cu, Sn, Cr, Ni, Mo, Ge, Sr, Pd, Pt, Nb, Sb, Re, Os, Ir, Pt, Au, Hg, Te, Rb and Bi and should, in particular, be selected from the group consisting of Fe, Co, V, Mn and Cu. It is noted that both Fe(ll) and Fe(lll) complexes can be used.

It has proved advantageous for the second agent to comprise or consist of at least one iron compound selected from the group consisting of: iron carboxylates; iron 1,3-dioxo complexes; ammonium-ferric-ferrocyanide [ammonium iron(3+) hexakis(cyano-C)ferrate(4-)]; and, iron dicylcopentadienyl complexes. In this regard, exemplary iron carboxylates include iron lactate, iron naphthenate, iron 2-ethyl hexanoate (iron octanoate), iron formate, iron acetate, iron propionate, iron butyrate, iron pentanoate, iron hexanoate, iron heptanoate, iron nonanoate, iron decanoate, iron neodecanoate and iron dodecanoate. Exemplary iron 1,3-dioxo complexes include iron acetoacetonate, and the iron complexes of acetyl acetone, benzoyl acetone, dibenzoyl methane and acetoacetates such as diethyl acetoacetamide, dimethyl acetoacetamide, dipropylacetoacetamide, dibutylacetoacetamide, methyl acetoacetate, ethyl acetoacetate, propyl acetoacetate and butylacetoacetate. Examples of iron dicylcopentadienyl complexes are those complexes comprising iron and two substituted or unsubstituted cyclopentadienyl ligands, wherein the optional substituents on the cyclopentadienyl ring are selected from C₁-C₁₂ alkyl, C₆-C₁₈ aryl or C₇-C₁₈ aralkyl. A particular example of an iron dicylcopentadienyl complex is ferrocene (bis(η5-cyclopentadienyl)iron).

As further exemplary transition metal compounds which may be used in or as the second curing agent, particular mention may be made of salts and complexes of copper, cobalt, vanadium and manganese. Herein cobalt compounds can be used as the transition metal without legislative and toxicity issues on account of the small amounts utilized. Suitable counteranions present in the salts include: halide; nitrate; sulphate; sulphonate; phosphate; phosphonate; oxide; or, carboxylate, such as lactate, 2-ethyl hexanoate, acetate, proprionate, butyrate, oxalate, laurate, oleate, linoleate, palmitate, stearate, acetyl acetonate, octanoate, nonanoate, heptanoate, neodecanoate or naphthenate.

### Oxygen Scavenger

The two-part (2K) composition based on acrylic resins may desirably be characterized by the presence of at least one oxygen scavenger. Said oxygen scavenger(s) may be included in either the first (A) or second (B) parts of the composition or in both parts thereof. When an oxygen scavenger is provided in both parts of the composition, the identity of the oxygen scavenger in each part is independently determined and, as such, may be the same or different for each part. It is preferred herein that the first part of the composition comprises an oxygen scavenger.

Said oxygen scavengers are reactive towards activated oxygen species and should also be stable in contact with oxygen or air at room temperature. Suitable examples of oxygen scavengers include: alkylated phenols; alkylated bisphenols; alkylidene bis-, tris- and polyphenols; thio-, bis-, tris- and polyalkylated phenols; sulfur-containing esters; organic phosphines; organic phosphites; organic phosphates; hydroquinones; inorganic compounds, such as sulphates, sulfites, phosphites and nitrites of metals, particularly those of Groups 1 and 2 of the periodic table and first row transition metals, zinc and tin; sulfur-containing compounds, such as thiodipropionic acid and its esters and salts, and thio-bis(ethylene glycol β-aminocrotonate); amino acids, such as cysteine and methionine; and, nitrogen-containing compounds capable of reacting with activated forms of oxygen including primary, secondary and tertiary amines. Preferably, the oxygen scavenger is selected from the group consisting of: triphenylphosphine; triethylphosphite; triisopropylphosphite; triphenylphosphite; tris(nonylphenyl) phosphite; butylated hydroxytoluene; butylated hydroxyanisole; tris(2,4-di-tert-butylphenyl) phosphite; dilaurylthiodipropionate; 2,2-methylene-bis-(6-t-butyl-p-cresol); tetrakis(2,4-d-tert-butylphenyl)4,4'-biphenylene diphosphonate; poly(4-vinylpyridine); and, mixtures thereof.

It is noted that the oxygen scavenger may be in the form of a polymer or oligomer. Such forms may be prepared by covalently bonding a compound - such as those oxygen scavengers listed - to a monomer or co-monomer. A limitation on the molecular size of the oxygen scavenger will be the effect, if any, it has on functional properties of any other polymer with which it is combined.

### Illustrative Embodiment of a Two-Part (2K) Composition based on Acrylic Resin

In an exemplary embodiment of a liquid, state curable composition from which the cured adhesive (10) may be obtained, there is provided a two-part (2K) composition comprising: a first part (A) comprising, based on the weight of said first part: from 5 to 15 wt.%, preferably from 6 to 12 wt.% of non-polymerizable electrolyte, wherein said electrolyte comprises at least one non-polymerizable salt selected from the group consisting of: ammonium salts; pyridinium salts; phosphonium salts; imidazolium salts; oxazolium salts; guadinium salts; and, thiazolium salts; from 30 to 60 wt.%, preferably from 35 to 50 wt.%, of (meth)acrylate monomer, wherein said (meth)acrylate monomer comprises at least one C₁-C₆ alkyl ester of (meth)acrylic acid; and, from 5 to 15 wt.%, preferably from 6 to 12 wt.%, of co-polymerizable acid, wherein said co-polymerizable acid is selected from the group consisting of methacrylic acid, acrylic acid, itaconic acid, maleic acid, aconitic acid, crotonic acid, fumaric acid and mixtures thereof; and, a second part (B) comprising, based on the weight of said second part: from 10 to 40 wt.% preferably from 20 to 40 wt.% of a first curing agent which comprises or consists of at least one free radical initiator which decomposes under the action of heat to provide free radicals; from 0.01 to 1 wt.%, preferably from 0.01 to 0.5 wt.% of a second curing agent which consists of at least one compound which is a salt or a complex of a transition metal selected from the group consisting of Fe, Co, V, Mn and Cu; from 5 to 20 wt.%, preferably from 5 to 15 wt.% of a wax; and, from 30 to 60 wt.%, preferably from 40 to 60 wt.% of a solubilizer, wherein said first part (A) of the two-part (2K) composition further comprises, based on the total weight of the composition: from 0.1 to 2 wt.%, preferably from 0.1 to 1 wt.% of an oxygen scavenger; and, from 1 to 10 wt.% of a rheology control agent, further wherein said first (A) and second (B) parts are mixed at a ratio by weight of A:B of from 15:1 to 5:1, preferably of from 12:1 to 8:1 and more preferably of 10:1.

It is preferred in this exemplary embodiment that the first curing agent is a peroxide or hydroperoxide compound selected from the group consisting of tert-butyl peroxide, tert-butyl perbenzoate, cumene hydroperoxide, tert-butyl peroxybenzoate, diacetyl peroxide, benzoyl peroxide, tert-butyl peracetate, lauryl peroxide and mixtures thereof: a particular preference for benzoyl peroxide is noted. Independently of or additional to this statement of preference for the first curing agent, the second curing agent preferably comprises of consists of at least one iron-based compound selected from the group consisting of ferrocene, iron(II) acetylacetonate and ammonium iron(3+) hexakis(cyano-C)ferrate(4-).

### 1.2.3.3 Polyurethane Based Matrix Resin Systems

As noted above, the polymeric resin (A^{R}) of the curable, liquid state composition may be based on polyurethane. As such, there may be provided a two-part (2K) composition comprising: a first part comprising: non-polymerizable electrolyte; at least one polyol selected from the group consisting of fatty alcohols, polyester polyols, polyether polyols, polyether-polyester polyols and polycarbonate polyols; and, optionally further active hydrogen compounds; and, a second part comprising at least one polyisocyanate,
wherein said composition is characterized in that the molar ratio of NCO groups to active hydrogen atoms is at least 1:1. Where the molar ratio is greater than 1:1, the stoichiometric excess of isocyanate (NCO) groups results in the formation of an NCO-functional polymer upon reaction of the first and second parts.

The curable two-part (2K) composition preferably comprises, based on the weight of the composition: a first part comprising: from 1 to 20 wt.%, preferably from 1 to 10 wt.% of non-polymerizable electrolyte; from 20 to 80 wt.%, preferably from 20 to 60 wt.% of at least one polyol selected from the group consisting of fatty alcohols, polyester polyols, polyether polyols, polyether-polyester polyols and polycarbonate polyols; and, optionally further active hydrogen compounds; and, a second part comprising at least one polyisocyanate, wherein said composition is characterized in that the molar ratio of NCO groups to active hydrogen atoms is from 1:1 to 1.2:1.

### Polyol(s)

At least one reactant polyol of the two-part (2K) composition of this embodiment is selected from the group consisting of: fatty alcohols, polyester polyols, polyether polyols, polyether-polyester polyols and polycarbonate polyols. Such a polyol or polyols should preferably have a number average molecular weight (Mn) of from 200 to 50,000 g/mol, for instance from 200 to 8000 g/mol. Alternatively or additional to this molecular weight characterization, the hydroxyl number of the reactant polyol(s) should preferably be from 2 to 850 mg KOH/g, for instance from 25 to 500 mg KOH/g.

Polycarbonate diols may be obtained by reacting carbonic acid derivatives with diols. Exemplary carbonic acid derivatives are diaryl carbonates including but not limited to diphenyl carbonate, di(C₁-C₆)alkyl carbonates and phosgene. Exemplary diols include but are not limited to: ethylene glycol; 1,2-propanediol; 1,3-propanediol; 1,3-butanediol; 1,4-butanediol; 1,5-pentanediol; 1,6-hexanediol; cyclohexane dimethanol; diethylene glycol; dipropylene glycol; neopentylglycol; and, mixtures thereof.

Polyester diols may be obtained by reacting diols with either aliphatic, aromatic or cycloaliphatic dicarboxylic acids or, in some circumstances, the corresponding anhydrides thereof: the reaction may optionally take place in the presence of an esterification catalyst. Examples of suitable dicarboxylic acids include but are not limited to: adipic acid; glutaric acid; pimelic acid; suberic acid; nonanedicarboxylic acid; decanedicarboxylic acid; succinic acid; maleic acid; sebacic acid; azelaic acid; terephthalic acid; isophthalic acid; o-phthalic acid; tetrahydrophthalic acid; hexahydrophthalic acid; trimellitic acid; and, 1,4-cyclohexanedicarboxylic acid. Examples of suitable anhydrides include succinic, o-phthalic and trimellitic anhydride. It is noted that various commercially available dimeric fatty acids in saturated (hydrogenated) or unsaturated form may also be used as the dicarboxylic acid. And examples of suitable diols for the preparation of the polyester diols are: ethanediol; di-, tri- or tetraethylene glycol; 1,2-propanediol; di-, tri-, tetrapropylene glycol; 1,3-propanediol; 1,4-butanediol; 1,3-butanediol; 2,3-butanediol; 1,6-hexanediol; 1,5-pentanediol; 2,2-dimethyl-1,3-propanediol (neopentylglycol); 1,4-dihydroxycyclohexane; 1,4-dimethylcyclohexane; 1,8-octanediol; 1,10-decanediol; 1,12-decanediol; 2,2,4- and/or 2,4,4-trimethyl-1,3-pentanediol; and, mixtures thereof.

Other useful polyester diols are those obtainable from diol initiated polymerization of hydroxycarboxylic acids containing from 2 to 12 carbon atoms or a lactone thereof. The hydroxycarboxylic acids may be saturated or unsaturated, linear or branched, of which example include: glycolic acid; lactic acid; 5-hydroxy valeric acid; 6-hydroxy caproic acid; ricinoleic acid; 12-hydroxy stearic acid; 12-hydroxydodecanoic acid; 5-hydroxydodecanoic acid; 5-hydroxydecanoic acid; and. 4-hydroxydecanoic acid. Examples of suitable lactones are β-propiolactone, δ-valerolactone, (C₁-C₆)alkyl-valerolactone, ε-caprolactone and (C₁-C₆)alkyl-ε-caprolactone.

Exemplary commercial polyether-polyester polyols having utility in the present invention include Solvermol^{®} 805 and Solvermol^{®} 750 available from BASF.

The above aside, it is preferred that at least one polyol from which the polyurethane is derived is a polyether polyol, in particular a polyether polyol having a polydispersity (PD) of less than 2, preferably less than 1.5, and more preferably less than 1.3. For completeness, a "*polyether*" is understood for purpose of the present invention as a polymer whose repeating unit contains ether functionalities C-O-C in the main chain. Polymers having lateral ether groups, such as cellulose ethers, starch ethers, and vinyl ether polymers, as well as polyacetals, are therefore not covered by this definition. Desirably, the polyether polyol is a polyoxyalkylene glycol and in particular a polyoxy(C₂-C₃)alkylene glycol. For completeness, the term polyoxy(C₂-C₃)alkylene refers to polyether radicals derived from ethyleneoxide, propyleneoxide or both ethyleneoxide and propyleneoxide.

In some embodiments, the first part includes at least one fatty polyol. Suitable fatty polyols include, for instance fatty acids, esters of fatty acids, amides of fatty acids and dimers, trimers, oligomers or polymers of fatty acids thereof, provided said compounds possess two or more hydroxyl groups. The hydroxyl functions of a suitable fatty polyol may reside on the fatty acid residue, on other parts of the molecule, or on both.

As exemplary fatty polyols there may be mentioned: castor oil; the products of hydroxylation of unsaturated or polyunsaturated natural oils; the products of hydrogenation of unsaturated or polyunsaturated polyhydroxyl natural oils; polyhydroxyl esters of alkyl hydroxy fatty acids; polymerized natural oils; and, alkylhydroxylated amides of fatty acids. A preference may be noted for the use, either alone or in combination of: castor oil; hydroxylated soybean oil; hydrogenated castor oil; polymerized castor oil; hydroxy ethyl ricinoleate; and, hydroxy ethyl ricinoleamide.

### Optional Further Active Hydrogen Compounds

Certain polyols may function not only as reactants in the synthesis of the polyurethanes but also as solubilizers for the non-polymerizable electrolyte. Broadly, solubilizers have the function of promoting the miscibility of the electrolyte within the composition formed upon admixture of the two parts thereof: solubilizers are, as such, preferably polar compounds and should desirably be liquid at room temperature.

In this category there may be mentioned: polyoxyalkylene glycols; polpolyhydric alcohols; and, sugars. Whilst polyoxyalkylene glycols are mentioned hereinabove, it is noted that such a solubilizing function may be particularly attained through the use of polyoxy(C₂-C₃)alkylene glycols having a weight average molecular weight of from 200 to 10000 g/mol, for example 200 to 2000 g/mol.

Polyhydric alcohols and sugars having utility as solubilizers and which may be used alone or in combination, include, but are not limited to: ethylene glycol, 1,3-propanediol, cyclohexandiol, hydroquinone, catechol, resorcinol, phloroglucinol, pyrogallol, hydroxyhydroquinone, tris(hydroxymethyl)benzene, tris(hydroxymethyl)benzene with three methyl or ethyl substituents bonded to the remaining benzene carbon atoms, isosorbide, isomannide, isoidide, glycerol, cyclohexane-1,2,4-triol, 1,3,5-cyclohexanetriol, pentane-1,2,3-triol, hexane-1,3,5-triol, erythritol, 1,2,4,5-tetrahydroxybenzene, threitol, arabitol, xylitol, ribitol, mannitol, sorbitol, inositol, fructose, glucose, mannose, lactose, 1,1,1-tris(hydroxymethyl)propane, 1,1,1-tris(hydroxymethyl)ethane, trimethylolpropane, di(trimethylolpropane), trimethylolpropane ethoxylate, 2-hydroxymethyl-1,3-propanediol, pentaerythritol allyl ether and pentaerythritol.

It is noted that at least one monol can preferably be employed in synthesizing the polyurethane as a further active hydrogen reactant ii). For example, a mono-functional hydrophilic polyoxyalkylene - such as polyoxyethylene or polyoxpropylene - can be incorporated into the polyurethane as a means of modifying the properties of the latex and improving its ease of emulsion formation. When included, the monol should present in an amount of from 0.1 to 5 wt.%, based on the weight of i) said at least one polyol.

The present disclosure does not preclude the presence in the first part of a chain extender, particularly as regards that embodiment where the NCO-functional compound(s) of the second part comprise or consist of an NCO-functional pre-polymer. As known to the skilled artisan, typical chain extenders have a weight average molecular weight (Mw) of from 18 to 500 g/mol and have at least two active hydrogen containing groups. Whilst water may therefore be used as a chain extender, it is however preferred that the two part 2K) composition is substantially free of water. The use of polyamines might be suggested however and as exemplary polyamines which may be used alone or in combination there may be mentioned: aminated polypropylene glycols such as Jeffamine D-400, available from Huntsman Chemical Company; hydrazine; piperazine; amino ethyl piperazine; 2-methyl piperazine; 1,5-diamino-3-methyl-pentane; isophorone diamine; ethylene diamine; diamino butane; hexane diamine; hexamethylene diamine; tetramethylene tetraamine; aminoethyl propyl trimethoxy silane; diethylene triamine; triethylene tetramine; triethylene pentamine; ethanolamine; and, lysine.

Where a chain extender is included, the added amount thereof is constrained by the aforementioned molar ratio of the active hydrogen atoms to the NCO groups in the two part (2K) composition.

### Polyisocyanate

The second part of the composition comprises at least one polyisocyanate. As used herein "*polyisocyanate*" means a compound comprising at least two -N=C=O functional groups, for example from 2 to 5 or from 2 to 4 -N=C=O functional groups. Suitable polyisocyanates include aliphatic, cycloaliphatic, aromatic and heterocyclic isocyanates, dimers and trimers thereof, and mixtures thereof.

Aliphatic and cycloaliphatic polyisocyanates can comprise from 6 to 100 carbon atoms linked in a straight chain or cyclized and having at least two isocyanate reactive groups. Examples of suitable aliphatic isocyanates include but are not limited to straight chain isocyanates such as ethylene diisocyanate, trimethylene diisocyanate, tetramethylene diisocyanate, 1,6-hexamethylene diisocyanate (HDI), octamethylene diisocyanate, nonamethylene diisocyanate, decamethylene diisocyanate, 1,6,11-undecanetriisocyanate, 1,3,6-hexamethylene triisocyanate, bis(isocyanatoethyl)-carbonate, and bis (isocyanatoethyl) ether. Exemplary cycloaliphatic polyisocyanates include, but are not limited to, dicyclohexylmethane 4,4'-diisocyanate (H₁₂MDI), 1-isocyanatomethyl-3-isocyanato-1,5,5-trimethyl-cyclohexane (isophorone diisocyanate, IPDI), cyclohexane 1,4-diisocyanate, hydrogenated xylylene diisocyanate (H₆XDI), 1-methyl-2,4-diisocyanato-cyclohexane, m- or p-tetramethylxylene diisocyanate (m-TMXDI, p-TMXDI) and dimer fatty acid diisocyanate.

The term "*aromatic polyisocyanate*" is used herein to describe organic isocyanates in which the isocyanate groups are directly attached to the ring(s) of a mono- or polynuclear aromatic hydrocarbon group. In turn, the mono- or polynuclear aromatic hydrocarbon group means an essentially planar cyclic hydrocarbon moiety of conjugated double bonds, which may be a single ring or may include multiple condensed (fused) or covalently linked rings. The term aromatic also includes alkylaryl. Typically, the hydrocarbon (main) chain includes 5, 6, 7 or 8 main chain atoms in one cycle. Examples of such planar cyclic hydrocarbon moieties include, but are not limited to, cyclopentadienyl, phenyl, napthalenyl-, [10]annulenyl-(1,3,5,7,9-cyclodecapentaenyl-), [12]annulenyl-, [8]annulenyl-, phenalene (perinaphthene), 1,9-dihydropyrene and chrysene (1,2-benzophenanthrene). Examples of alkylaryl moieties are benzyl, phenethyl, 1-phenylpropyl, 2-phenylpropyl, 3-phenylpropyl, 1-naphthylpropyl, 2-naphthylpropyl, 3-naphthylpropyl and 3-naphthylbutyl.

Exemplary aromatic polyisocyanates include, but are not limited to: all isomers of toluene diisocyanate (TDI), either in the isomerically pure form or as a mixture of several isomers; naphthalene 1,5-diisocyanate; diphenylmethane 4,4'-diisocyanate (MDI); diphenylmethane 2,4'-diisocyanate and mixtures of diphenylmethane 4,4'-diisocyanate with the 2,4' isomer or mixtures thereof with oligomers of higher functionality (so-called crude MDI); xylylene diisocyanate (XDI); diphenyl-dimethylmethane 4,4'-diisocyanate; di- and tetraalkyl-diphenylmethane diisocyanates; dibenzyl 4,4'-diisocyanate; phenylene 1,3-diisocyanate; and, phenylene 1,4-diisocyanate.

The polyisocyanates, where required, may have been biuretized and / or isocyanurated by generally known methods, such as described in UK Patent No. 889,050.

The term "*polyisocyanate*" is here also intended to encompass pre-polymers formed by the partial reaction of the aforementioned aliphatic, cycloaliphatic, aromatic and heterocyclic isocyanates with polyols to give isocyanate functional oligomers, which oligomers may be used alone or in combination with free isocyanate(s). When employed, the NCO-functional pre-polymers should preferably be characterized by at least one of: a) an NCO content of from 5 to 30%, preferably from 10 to 25 wt.% based on the weight of the pre-polymer; b) an NCO functionality of from 2.2 to 3.0, preferably from 2.2 or 2.4 to 2.9; c) a viscosity at 20°C of from 300 to 35,000 mPa.s, preferably from 1,000 to 10,000 mPa.s; and, d) a number average molecular weight (Mn) of from 500 to 30,000, for example from 500 to 15,000 or from 500 to 10,000 g/mol. For completeness, these characterizations a) to d) are not intended to be mutually exclusive: indeed, the pre-polymer may meet one, two, three or four of these stated characterizations.

Commercial examples of suitable polyisocanates include, without intention to limit the present invention: Desmodur product series, such as Desmodur E 744, available from Covestro Deutschland; Hysol HF6005 isocyanate, available from Henkel Corporation; Isonate M product series, available from The Dow Chemical Company; Lupranat product series, available from BASF; and, Suprasec product series, available from Huntsman.

### Optional Catalysts

The polyurethane-based composition - and conventionally the first part thereof - may comprise standard catalysts for the reaction between polyisocyanates and active hydrogen compounds, as known in the art. Such catalysts include but are not limited to: stannous salts of carboxylic acids, such as stannous octoate, stannous oleate, stannous acetate and stannous laureate; dialkyltin dicarboxylates, such as dibutyltin dilaureate and dibutyltin diacetate; tertiary amines; alkanolamine compounds; 2,3-dimethyl-3,4,5,6-tetrahydropyrimidine; tetraalkylammonium hydroxides; alkali metal hydroxides; alkali metal alcoholates; tin alkoxides, such as dibutyltin dimethoxide, dibutyltin diphenoxide and dibutyltin diisoproxide; tin oxides, such as dibutyltin oxide and dioctyltin oxide; the reaction products of dibutyltin oxides and phthalic acid esters; tin mercaptides; alkyl titanates; organoaluminum compounds such as aluminum trisacetylacetonate, aluminum trisethylacetoacetate and diisopropoxyaluminum ethylacetoacetate; chelate compounds such as zirconium tetraacetylacetonate and titanium tetraacetylacetonate; organosilicon titanium compounds; bismuth tris-2-ethylhexanoate, bismuth neodecanoate complexes and complexes of bismuth with hydroxypropyl ethylene diamine and hydroxylethyl ethylene diamine, available as Bicat^{®} catalysts from Everchem Specialty Chemicals; acid compounds such as phosphoric acid and p-toluenesulfonic acid; triphenylborane; triphenylphosphine; 1,8-diazabicycloundec-7-ene (DBU); 1,5-diazabicyclo[4.3.0]non-5-ene; 1,4-diazabicyclo[2.2.2]octane; 4-dimethylaminopyridine; 1,5,7-triazabicyclo[4.4.0]dec-5-ene; 7-methyl-1,5,7-triazabicyclo[4.4.0]dec-5-ene; 1,8-bis(tetramethylguanidino)naphthalene; and, 2-tert-butyl-1,1,3,3-tetramethylguanidine. Depending on the nature of the isocyanate, the amount of catalyst employed is typically in the range from 0.005 to 5 wt.%, for example from 0.1 to 1 wt.% of the two part (2K) composition.

### Illustrative Embodiment of a Two-Part (2K) Composition based on Polyurethane Resin

In an exemplary embodiment of a liquid, state curable composition from which the cured adhesive (10) may be obtained, there is provided a two-part (2K) composition comprising, based on the weight of the composition: a first part comprising: from 20 to 80 wt.%, preferably from 20 to 60 wt.% of i) at least one polyol selected from the group consisting of fatty alcohols, polyester polyols, polyether polyols, polyether-polyester polyols and polycarbonate polyols; ii) optionally further active hydrogen compounds; and, from 1 to 20 wt.%, preferably from 1 to 10 wt.% of iii) non-polymerizable electrolyte, wherein said electrolyte comprises at least one non-polymerizable salt selected from the group consisting of: ammonium salts; pyridinium salts; phosphonium salts; imidazolium salts; oxazolium salts; guadinium salts; and, thiazolium salts; and, a second part comprising iv) at least one polyisocyanate, wherein said composition further comprises, based on the weight of the composition: from 0.5 to 5 wt.% of (v) at least one additive selected from the group consisting of: morin(2-(2,4-dihydroxy phenyl)-3,5,7-trihydroxy-4H-1-cumarone-4-ketone); 3,7-dihydroxy-2-naphthoic acid; pyrogallol carboxylic acid; 3,4-dihydroxy-benzene guanidine-acetic acid; gallic acid; para-aminosalicylic acid; 4,4'-methylene-bis(3-hydroxy-2-naphthoic acid; and, citric acid; from 0.005 to 5 wt.%, preferably from 0.1 to 1 wt.% of catalyst; and, from 0.5 to 10 wt.% of electrically non-conductive particulate filler, further wherein said composition is characterized in that the molar ratio of NCO groups to active hydrogen atoms is from 1:1 to 1.2:1.

Whilst it is not strictly necessary, the aforementioned catalyst will normally be formulated in the first, polyol part of the composition.

The following examples are illustrative of the present invention and are not intended to limit the scope of the invention in any way.

### EXAMPLES

The following commercially available materials were used in the Examples:

| | |
|---|---|
| WIK20487-36A: | Conductive ink available from Printed Electronics PD. |
| ANR-NIK-0003-095D: | Water based conductive ink based on carbon black, available from Printed Electronics PD. |
| Loctite ECI 1216 E&C: | Solvent based conductive ink comprising silver particles and epoxy resin, available from Henkel Corporation. |
| FA-SAB-499: | A 50:50 mixture by weight of surfactant coated, spherical silver particles having a D₅₀ of 1.2 microns and silver flakes having a D₅₀ of 9 to 11 microns, available from DOWA Electronics Materials Co., Ltd. |
| SF174: | available from Ames Advanced Materials Corporation. |
| SF125: | available from Ames Advanced Materials Corporation. |
| SP06S60: | available from Potter Industries. |
| Butvar B-79: | Thermoplastic polyvinyl butyral resin, available from Eastman. |
| Disperbyk 2118: | Dispersing additive, available from BYK Chemie. |
| Luviskol+: | Non-ionic film forming agent, available from BASF AG. |
| Crastin SK605: | Polybutylene terephthalate (PBT) lap shear substrates, available from DuPont. |
| Film 1: | Adhesive film having electrolyte functionality based on epoxide resins. |
| Methacrylic acid: | Available from Acros Organics. |
| Aerosil 200: | Hydrophilic fumed silica, available from Evonik Industries. |
| Zinc oxide nanopowder: | Available from Sigma Aldrich. |
| Kraton D 1155 ES: | Linear block copolymer based on styrene and butadiene with bound styrene of 40% mass, available from Kraton Corporation. |
| Hypro2000X168LC: | Methacrylate terminated polybutadiene rubber, available from Huntsman. |
| Pluracol V10: | Ethylene oxide-propylene oxide copolymer ether with trimethylolpropane (CAS No. 52624-57-4) available from BASF SE. |
| Benzoflex 2088: | Blend of diethylene glycol benzoate, dipropylene glycol benzoate and triethylene glycol benzoate available from Eastman Chemical Company. |
| Triphenylphosphine: | Available from Merck KGaA |
| IGI 1239 A: | Refined wax, available from International Group Inc. |
| DER 331: | Bisphenol-A epoxy resin, available from Olin Corporation. |
| Benzoyl peroxide (75%): | Powder, available from Arkema Inc. |

All remaining ingredients of the composition may be obtained from Sigma Aldrich.

### Conductive Ink Preparations C1-C3

Three conductive inks were prepared by mixing the ingredients listed in Table 1 below.

**Table 1**

| Ingredient | Conductive Ink C1 (wt.%) | Conductive Ink C2 (wt.%) | Conductive Ink C3 (wt.%) |
|---|---|---|---|
| Propylene Glycol 1-Monomethyl Ether 2-Acetate | 20.5 | 20.5 | 20.5 |
| 2-butoxyethanol | 15.0 | 15.0 | 15.0 |
| Butvar B-79 | 3.0 | 3.0 | 3.0 |
| FA-SAB-499 | | 53.0 | |
| SP06S60 | 35.0 | | |
| SF125 | 15.0 | | |
| SF174 | 3.0 | | |
| S0003NM2 | | | 53.0 |
| Disperbyk 2118 | 0.5 | 0.5 | 0.5 |
| (3-Acryloxypropyl) Trimethoxy Silane | 1.0 | 1.0 | 1.0 |
| N-(2-Aminoethyl)-3-aminopropyltrimethoxysilane; 97% | 2.0 | 2.0 | 2.0 |
| Luviskol + | 5.0 | 5.0 | 5.0 |

### Example 1

Lap Shear Substrate Preparation: Formulations C1 to C3, WIK20487-36A (hereinafter C4) and ANR-NIK-0003-095D (hereinafter C5) were applied to lap shear substrates of polybutylene terephthalate (PBT, Crastin SK605) by bar coating to a wet film thickness of 50 microns. The substrates were then placed in an oven set at 65°C for 30 minutes. The substrates were removed from the oven and permitted to cool for 30 minutes: at that time, the dry film thickness of the ink provided to each substrate was determined to be 10-20µm.

Bonded Assembly Preparation: Bonded assemblies for lap shear testing were prepared using the ink coated PBT substrates - as obtained above - which were bonded to stainless-steel lap shear substrates (*SUS304, Japanese JIS Standard*). The bonded region of the assemblies possessed the configuration depicted in Figure 1a appended hereto. However, within the assembly, a fraction of the ink-coated PBT substrate extended from the bonded region. Further, three assemblies were prepared for each conductive ink.

The stainless-steel lap shear substrates were first primed with an adhesion promoting primer (2 wt.% N-(2-aminoethyl)-3-aminopropyltrimethoxysilane; 98 wt.% ispropanol), which primer was applied with a brush and the solvent permitted to flash off under ambient conditions for one minute. Film 1 was then applied to the primed surface of the stainless-steel lap shear substrates, which substrate was then mated with the coated PBT substrate and clamped. The bond overlapping area for each stated substrate was 1.25 cm x 1.25 cm with a bond thickness of 0.1 cm (40 mil).

The bonded assemblies were then placed in an oven (65°C, 30 minutes) before being removed and held at room temperature for 24 hours. Resistance measurements and lap shear strengths were then determined for each assembly, enabling mean values and the standard deviations thereof to be recorded.

Control Assembly: A control bonded assembly was prepared using: a PBT substrate (Crastin SK605) which had not received an ink coating; a stainless-steel lap shear substrate (SUS304) which had not been primed; and, Film 1 interposed between said substrate.

Resistance Measurements: A two-point probe (RS Pro RS14 Handheld Multimeter) was employed for determining the resistance of the bonded assembly. A first probe was disposed on the external surface of the stainless-steel (SUS304) lap shear substrate and the second probe was disposed on the ink coating outside of the bonded area.

Tensile lap shear (TLS) Test: This test was performed at room temperature based upon ASTM D3163-01 *Standard Test Method for Determining Strength of Adhesively Bonded Rigid Plastic Lap-Shear Joints in Shear by Tension Loading.*

The results of the above-described tests are indicated in Table 2 herein below. The standard deviation of a mean value is provided in parentheses, where applicable.

**Table 2**

| Conductive Ink | Control | C1 | C2 | C3 | C4 | C5 |
|---|---|---|---|---|---|---|
| Bond Strength (MPa) | 1.14 (0.07) | 1.63 (0.19) | 1.75 (0.31) | 1.85 (0.08) | 3.26 (0.50) | 1.81 (0.39) |
| Resistance (mΩ) | - | 4.4 | 3.8 | 1.2 | 1.0 | 1.2 |

The ink coatings (C1-C5) provided for improved adhesion relative to the control and, furthermore, provided an electrically conductive layer at the surface of the non-conductive PBT substrate.

### Preparation of Curable Electochemically Debondable Adhesive (EDL1)

Part A and Part B of a two-part (2k) adhesive composition (hereinafter EDL1) were prepared in accordance Table 3 herein below.

**Table 3**

| Part A | | Part B | |
|---|---|---|---|
| Ingredient | Wt. (g) | Ingredient | Wt. (%) |
| Methylmethacrylate | 41.5 | Pluracol V10 | 10.0 |
| Methacrylic acid | 10.0 | Benzoflex 2088 | 20.4 |
| Phosphoric acid 2-hydroxyethyl methacrylate ester | 1.0 | DER 331 | 21.0 |
| 2,2'-(4-methylphenylimino) diethanol | 1.5 | IG 1239 A | 11.5 |
| 1-dodecyl-3-methylimidazolim bis(trifluoromethylsulfonyl)imide | 10.0 | Ammonium iron(3+) hexakis(cyano-C)ferrate(4-) | 0.1 |
| Aerosil 200 | 3.0 | Benozyl Peroxide (75%) | 37.0 |
| Zinc oxide nanopowder | 1.0 | | |
| Kraton D 1155 ES | 16.5 | | |
| Nipol 1472X | 6.0 | | |
| Hypro 2000X 168 LC | 10.0 | | |
| Triphenylphosphine | 0.5 | | |
| Total | 101 | Total | 100 |

The parts were loaded at a ratio by weight (A:B) of 10:1 into separate compartments of a 50g cartridge and sealed at both ends. The cartridge was then loaded into a cartridge-gun and a mixing tip was installed on the front end. By application of constant pressure on the trigger, the two parts were pushed into the mixing tip to ensure sufficient mixing before application to the stated substrate.

### Example 2

Lap Shear Substrate Preparation: Loctite ECI 1216 E&C (hereinafter C6) were applied to lap shear substrates of the substrates tabulated below by bar coating to a wet film thickness of 50 microns. The substrates were then placed in an oven set at 65°C for 30 minutes. The substrates were removed from the oven and permitted to cool for 30 minutes: at that time, the dry film thickness of the ink provided to each substrate was determined to be 10-20µm.

Bonded Assembly Preparation: Bonded assemblies for lap shear testing were prepared using the ink coated substrates - as obtained above - which were bonded to stainless-steel substrates (SUS301, Japanese JIS Standard). The bonded region of the assemblies possessed the configuration depicted in Figure 1a appended hereto. However, within the assembly, a portion of the ink-coated substrate extended from the bonded region. Further, three assemblies were prepared for each electrically non-conductive substrate.

The stainless-steel substrates were first primed with an adhesion promoting primer (2 wt.% N-(2-aminoethyl)-3-aminopropyltrimethoxysilane; 98 wt.% ispropanol), which primer was applied with a brush and the solvent permitted to flash off under ambient conditions for one minute. The above prepared two-part (2K) composition (EDL1) was then applied to the primed surface of the stainless-steel substrate, which substrates was then mated with the coated PBT substrates and clamped. The bond overlapping area for each stated substrate was 1.25 cm x 1.25 cm (0.5" x 0.5") with a bond thickness of 0.25 cm (100 mil).

The applied two-part (2K) compositions were cured in the overlapping region by the application of a temperature of 65°C for 30 minutes. The bonded structures were then stored at room temperature for 24 hours prior to initial tensile testing.

Tensile lap shear (TLS) Test: This test was performed at room temperature based upon ASTM D3163-01 *Standard Test Method for Determining Strength of Adhesively Bonded Rigid Plastic Lap-Shear Joints in Shear by Tension Loading.* For each bonded assembly, tensile lap shear strength was investigated after said 24 hour storage period both prior and subsequent to the application of a constant potential of 30V across the adhesive layer for, independently, durations of 5, 10 and 20 minutes. The results are documented in Table 4 herein below.

**Table 4**

| Substrate to which Conductive Ink is Applied | Initial Bond Strength | Bond Strength after | Bond Strength after | Bond Strength after |
|---|---|---|---|---|
| | (MPa) | | | |
| | | | | |

| | | 30 V, 5 minutes (MPa) | 30 V, 10 minutes (MPa) | 30 V, 20 minutes (MPa) |
|---|---|---|---|---|
| Polyamide ( ) | 12.7 | 10.8 | 0.0 | 0.0 |
| Stainless-steel (SUS301) | 10.9 | 5.0 | 4.1 | 0.3 |

### Example 3

Lap Shear Substrate Preparation: Loctite ECI 1216 E&C (hereinafter C6) were applied to lap shear substrates of (TS21) below by bar coating to a wet film thickness of 50 microns. The substrates were then placed in an oven set at 65°C for 30 minutes. The substrates (Ink-TS21) were removed from the oven and permitted to cool for 30 minutes: at that time, the dry film thickness of the ink provided to each substrate was determined to be 10-20 µm.

Bonded Assembly Preparation: Bonded assemblies for lap shear testing were prepared using the ink coated TS21 substrates (Ink-TS21) - as obtained above - which were separately bonded to the following secondary substrates: a) annealed aluminium (An-A!) substrates; b) nickel (Ni) substrates; and, c) Ink-TS21 substrates. The bonded region of the assemblies possessed the configuration depicted in Figure 1a appended hereto with the exception that the bonded region of the lattermost assemblies (c)) possessed the configuration depicted in Figure 3a appended hereto. However, within each given assembly, a portion of the ink-coated TS21 substrate extended from the bonded region. Further, three assemblies were prepared for each secondary substrate.

The above prepared two-part (2K) composition (EDL1) was applied to the surface of the secondary substrate substrates, which substrates was then independently mated with a coated TS21 substrate and clamped. The bond overlapping area for each stated substrate was 1.25 cm x 1.25 cm with a bond thickness of 0.25 cm (100 mil).

The applied two-part (2K) compositions were cured in the overlapping region by the application of a temperature of 65°C for 30 minutes. The bonded structures were then stored at room temperature for 24 hours prior to initial tensile testing.

Tensile lap shear (TLS) Test: This test was performed at room temperature based upon ASTM D3163-01 *Standard Test Method for Determining Strength of Adhesively Bonded Rigid Plastic Lap-Shear Joints in Shear by Tension Loading.* For each bonded assembly, tensile lap shear strength was investigated after said 24 hour storage period both prior and subsequent to the application of a constant potential of 30V across the adhesive layer for 20 minutes. The results are documented in Table 5 herein below.

**Table 5**

| Substrate to which | Secondary Substrate | Initial Bond Strength | Bond Strength after |
|---|---|---|---|
| Conductive Ink is Applied | | (MPa) | 30 V, 20 minutes (MPa) |
| TS21 | An-A! | 13.4 | 7.9 |
| TS21 | Ni | 10.0 | 1.3 |
| TS21 | Ink-TS21 | 11.1 | 5.5 |

The presence of the conductive ink primer ensures that the adhesive bond strength is weakened by the application of a potential across the bond line.

In view of the foregoing description and examples, it will be apparent to those skilled in the art that equivalent modifications thereof can be made without departing from the scope of the claims.

## Claims

1. A bonded structure comprising:
a first substrate provided with a first electrically conductive surface;
a second substrate provided with a second electrically conductive surface; and,
an adhesive interposed between said first and second electrically conductive surfaces,
wherein at least one of said first and second electrically conductive surfaces is provided by a dried ink film comprising:
a) a matrix of a polymeric resin (F^{R}); and,
b) electrically conductive particles,
further wherein said adhesive is electrochemically debondable and is obtained by applying a curable liquid-state composition to at least one of said first and second electrically conductive surfaces followed by the curing of said composition, wherein the curable composition comprises a non-polymerizable electrolyte and a polymeric resin (A^{R}).

2. The bonded structure according to claim 1, wherein said first substrate possesses a volume electrical conductivity of less than 1 Sm⁻¹ and further wherein the first electrically conductive surface is provided by a first dried ink film comprising: a) a matrix of polymeric resin (F^{R}); and, electrically conductive particles.

3. The bonded structure according to claim 2, wherein said first dried ink film providing the first electrically conductive surface is disposed on and in direct contact with said first substrate.

4. The bonded structure according to claim 2 or claim 3, wherein said second substrate possesses a volume electrical conductivity of less than 1 Sm⁻¹ and further wherein the second electrically conductive surface is provided by a second dried ink film comprising: a) a matrix of polymeric resin (F^{R}); and, electrically conductive particles.

5. The bonded structure according to claim 4, wherein said second dried ink film providing the second electrically conductive surface is disposed on and in direct contact with said second substrate.

6. The bonded structure according to any one of claims 1 to 5, wherein the polymeric resin (F^{R}) of each dried ink film is chosen from: nitrocellulose; epoxy resins; phenolic resins; and, mixtures thereof.

7. The bonded structure according to any of claim 1 to 6, wherein the electrically conductive particles of each dried ink film are chosen from: carbon black; graphite; carbon nanotubes; carbon fibers; silver, silver coated copper; silver coated graphite; silver coated polymers; silver coated aluminium; silver coated glass; and, mixtures thereof.

8. The bonded structure according to any of claims 1 to 7, wherein the electrically conductive particles of each dried ink film comprise a mixture of graphite and carbon black, preferably wherein the ratio by weight of graphite to carbon black is from 1:1 to 5:1.

9. The bonded structure according to any one of claims 1 to 8, wherein the electrically conductive particles of each dried ink film comprise carbon black and further wherein said carbon black is **characterized by** at least one of:
i) a specific surface area of from 30 to 1400 m²/g, preferably from 100 to 700 m²/g and more preferably from 150 to 350 m²/g, as determined by low temperature nitrogen absorption in accordance with ASTM D 3037-78;
ii) a pore volume of from 1 to 4 ml/g as determined by mercury porosimetry;
iii) a pore diameter of from 25 to 1000 Angstroms, as determined by mercury porosimetry; and,
iv) an oil absorption number from 70 to 500 ml/100g, preferably from 100 to 300 ml/100g and more preferably from 150 to 200 ml/100g, as determined in accordance with ASTM D2414.

10. The bonded structure according to any one of claims 1 to 9, wherein the dried ink film is obtained by the evaporative removal of solvent from an ink composition comprising, based on the weight of the composition:
from 2 to 25 wt.%, preferably from 3 to 23 wt.% and more preferably from 4 to 21 wt.% of a) nitrocellulose resin;
from 3 to 45 wt.%, preferably from 4 to 43 wt.% and more preferably from 4.75 to 41 wt.% of b) electrically conductive particles, said electrically conductive particles comprising graphite and carbon black, wherein the ratio by weight of graphite to carbon black is from 1:1 to 5:1;
c) solvent; and,
from 0.5 to 9 wt.%, preferably from 0.5 to 7 wt.% and more preferably from 0.75 to 6 wt.% of d) di- or multi-functional isocyanate,
wherein the ratio by weight of the electrically conductive particles to resin is from 0.20:1 to 4:1, preferably from 0.25:1 to 3:1.

11. The bonded structure according to any one of claims 1 to 10, wherein said non-polymerizable electrolyte of the electrochemically debondable adhesive comprises or consists of a non-polymerizable salt of: ammonium; pyridinium; pyrrolidinium; phosphonium; imidazolium; oxazolium; guanidinium; or, thiazolium.

12. The bonded structure according to any one of claims 1 to 10, wherein said non-polymerizable electrolyte of the electrochemically debondable adhesive is selected from the group consisting of: trihexyl(tetradecyl)phosphonium bis(trifluoromethylsulfonyl)imide; tributylmethylphosphonium bis(fluorosulfonyl) imide; tributylmethyl- phosphonium methyl sulfate; tributylmethylammonium bis(fluorosulfonyl)imide; N-propyl-N-methylpyrrolidinium bis(fluorosulfonyl) imide; 1-ethyl-3-methyl-1H-imidazol-3-um methyl sulfate; 1-ethyl-3-methyl-1H-imidazol-3-um methanesulfonate; 1-ethyl-3-methylimidazolium trifluoromethanesulfonate; 1-ethyl-3-methylimidazolium bis(trifluoromethylsulfonyl)imide; 1-butyl-3-methylimidazolium methyl sulfate; 1-butyl-3-methylimidazolium methanesulfonate; 1-butyl-3-methyl-imidazolium-fluorosulfonate; 1-butyl-3-methylimidazolium trifluoromethanesulfonate; 1-butyl-3-methylimidazolium bis(trifluoromethylsulfonyl)imide; 1-butyl-3-methylimidazolium bis(fluorosulfonyl)imide; 1-dodecyl-3-methylimidazolium bis(fluorosulfonyl)imide; and, mixtures thereof.

13. The bonded structure according to any one of claims 1 to 12, wherein the polymeric resin (A^{R}) of the curable composition is chosen from: epoxy resins; acrylic resins; polyurethane resins; acrylic-epoxy hybrid resins; and, polyurethane-epoxy hybrid resins; and, mixtures thereof.

14. The bonded structure according to any one of claims 1 to 13, wherein the polymeric resin (A^{R}) is chemically cured by reaction with a curing agent.

15. The bonded structure according to claim 14, wherein at least a portion of the curing agent is dispersed within the dried ink film.

16. A method of disbonding the bonded structure as defined in any one of claims 1 to 16, the method comprising the steps of:
i) applying a voltage across said first electrically conductive surface and said second electrically conductive surface to form an anodic interface and a cathodic interface; and,
ii) disbonding said first and second substrates.

17. An article comprising:
an electronic component provided with an electrically conductive exterior surface;
a frame provided with an electrically conductive surface; and,
an adhesive interposed between said electrically conductive exterior surface of said electronic component and said electrically conductive surface of the frame, wherein:
said adhesive is electrochemically debondable and is obtained by applying a curable liquid-state composition to at least one of the electrically conductive exterior surface of the electronic component or the electronically conductive surface of said frame, followed by the curing of said composition; and,
wherein the curable composition comprises a non-polymerizable electrolyte and a polymeric resin (A^{R}),
wherein the article is **characterized in that**:
the frame comprises an integrant (I^{F}) of a material possessing a volume electrical conductivity of less than 1 Sm⁻¹ and having an outer surface and an inner surface;
a dried ink film (11^{F}) is disposed on the inner surface of said integrant (I^{F}), the dried ink film providing said electrically conductive surface of the frame; and,
the dried ink film comprises:
a) a continuous matrix of a polymeric resin (F^{R}); and,
b) electrically conductive particles.

18. A method of disbonding the article as defined in claim 17, the method comprising the steps of:
i) applying a voltage across said electrically conductive exterior surface of said electronic component and said second electrically conductive surface of said frame to form an anodic interface and a cathodic interface; and,
ii) disbonding said electronic component and said frame.

19. The method according to the claim 16 or claim 18, wherein the voltage applied in step i) is from 0.5 to 100 V and it is preferably applied for a duration of from 1 second to 60 minutes.
